# EUROPEAN PATENT SPECIFICATION

(11) **EP 4 514 862 B1**
(45) Date of publication and mention of the grant of the patent: **09.12.2026**
(21) Application number: 23723440.6
(22) Date of filing: 26.04.2023
(51) Int. Cl.: C09J 133/08, C08F 2/22, C08F 2/38, C08F 220/18, C09J 7/38

(54) **PRESSURE SENSITIVE ADHESIVES WITH STATIC PEEL RESISTANCE**
DRUCKEMPFINDLICHE KLEBSTOFFE MIT STATISCHER ABZIEHBESTÄNDIGKEIT
ADHÉSIFS SENSIBLES À LA PRESSION AVEC RÉSISTANCE AU PELAGE STATIQUE

(30) Priority: 27.04.2022 EP 22170339
(43) Date of publication of application: 05.03.2025
(73) Proprietor: Synthomer Deutschland GmbH, 45768 Marl (DE)
(72) Inventor: BÖHM, Nicolai, 45768 Marl (DE)
(74) Representative: f & e patent
(86) International application number: PCT/EP2023/060927
(87) International publication number: WO 2023/208999

(56) References cited:
- WO-A1-2008/146503
- WO-A1-2012/173247
- JP-A- 2009 057 394
- US-A1- 2007 196 647
- XU HONGPING ET AL: "Effect of the MMA content on the emulsion polymerization process and adhesive properties of poly(BA-co-MMA-co-AA) latexes", JOURNAL OF APPLIED POLYMER SCIENCE, vol. 123, no. 2, 9 August 2011 (2011-08-09), US, pages 1068 - 1078, XP055971311, ISSN: 0021-8995, [retrieved on 20221014], DOI: 10.1002/app.34572

## Description

The present invention relates to a pressure sensitive adhesive dispersion polymer, to the method for preparing, and the use of such pressure sensitive adhesive dispersion polymer, as well as a pressure sensitive adhesive composition comprising the pressure sensitive adhesive dispersion polymer. Furthermore, in particular but not exclusively the present invention is directed to the use of the pressure sensitive adhesive composition, a pressure sensitive adhesive sheet comprising such pressure sensitive adhesive composition and the use of the pressure sensitive adhesive sheet.

### Background of the invention

The use of self-adhesive labels ranges from everyday items to long-lasting special applications. They are composed of a face stock material and a pressure sensitive adhesive layer directly coated on the surface of the face stock material or transferred from a coated liner material. Labels are attached to a broad variety of substrate materials and surface textures. In many cases, the substrates are not flat but curved, e.g., bottles. In these cases, the labels are adapted to the contour of the substrate and thus bent. Most of the face stock materials are manufactured to be naturally flat. The forced bending poses a static stress on the pressure sensitive adhesive (PSA) because the face stock material tends to return to the flat shape, even if the face stock material has a flexible appearance. If the PSA is not able to withstand this static stress, the label will detach from the label edges after some time, often referred to as "winging", "flagging" or "repulsion". The problem is compounded by narrow radii and challenging substrates, such as low surface energy materials or embossed surface textures. Repulsion resistance is the inherent property that a PSA must have to be suitable for use on labels applied to curved contours.

One of the most common classes of PSA materials for labels are polyacrylates, especially aqueous polyacrylate dispersions. With proper adjustment of viscoelastic properties and glass transition temperature, polyacrylates are inherently tacky. Polyacrylates are known to be colorless-transparent and resistant to aging even after long periods of time and exposure to weathering.

**In** EP 2 913 373, good static peel strength of an acrylic-based polymer is achieved by adding a tackifier resin, e.g., a rosin with a softening point below 105 °C, and a phenolic resin with a softening point between 105 °C and 170 °C. However, the use of tackifiers has a number of disadvantages. PSAs with natural substance-based tackifiers such as rosin or terpene derivatives often have a yellowish color and suffer from poorer aging resistance. This is particularly undesirable for labels on transparent substrates, for items that are used over a long period of time, or for items that are exposed to weathering, especially **UV** radiation, over a long period of time. JOURNAL OF APPLIED POLYMER SCIENCE, Volume 123, Issue2 15 January 2012 Pages 1068-107*: Effect of the MMA content on the emulsion polymerization process and adhesive properties of poly(BA-coMMA-co-AA) latexes,* discloses a pressure sensitive adhesive for labelling comprising a pressure sensitive adhesive dispersion polymer obtained by emulsion polymerization. JP 2009/057394 A and WO 2008/146503 A1 disclose pressure sensitive adhesive sheets for labelling comprising a pressure sensitive adhesive dispersion polymer obtained by emulsion polymerization.

It is an objective of the present invention to provide a polyacrylate PSA with outstanding repulsion resistance without the use of tackifier resins.

### Summary of the invention

The following clauses summarize some aspects of the present invention. According to a first aspect, the present invention relates to a pressure sensitive adhesive dispersion polymer obtained by emulsion polymerization of a monomer mixture comprising:
(a) at least 60 wt.-% of one or more than one (meth)acrylic monomer(s) that individually yield(s) a homopolymer having a glass transition temperature (Tg) of - 40 °C or less;
(b) at least 5 wt.-% of one or more than one ethylenically unsaturated monomer(s) that individually yield(s) a homopolymer having a Tg of 15 °C or higher;
(c) 0.1 to 5 wt.-% of one or more than one ethylenically unsaturated monomer(s) having an acid and/or a hydroxyl functional group;
(d) 0 to 0.5 wt.-% of one or more than one monomer(s) having at least two ethylenically unsaturated groups; and
(e) 0.01 to 0.50 wt.-% of a chain transfer agent;

wherein monomers (a) to (d) are different from each other and the weight percentages is based on the total amount of monomers in the monomer mixture;
wherein the pressure sensitive adhesive dispersion polymer has a tanDelta maximum within a temperature range between -25 °C and -15 °C and a tanDelta value at 130 °C between 0.33 and 0.60, wherein the tanDelta is
determined by Dynamic Mechanical Analysis (DMA) at an angular frequency of 10 rad/s using a parallel plate tool.

The pressure sensitive adhesive dispersion polymer may have a tanDelta value at 130 °C between 0.34 to 0.55, preferably between 0.34 to 0.51, more preferably between 0.38 and 0.45.

The one or more than one (meth)acrylic monomer(s) (a) may individually yield a homopolymer having a glass transition temperature (Tg) in the range of -65 °C to -40 °C.

The one or more than one (meth)acrylic monomer(s) (a) may be selected from 2-ethylhexyl acrylate, n-butyl acrylate, 3-methylbutyl acrylate, hexyl acrylate, heptyl acrylate, octyl acrylate, nonyl acrylate, propyl acrylate, propylheptyl acrylate, heptadecyl acrylate, decyl methacrylate, dodecyl methacrylate, isodecyl methacrylate, octyl methacrylate, lauryl methacrylate, 2-methoxyethyl acrylate, 3-methoxypropyl acrylate, 3-ethoxypropyl acrylate, 3-methoxybutyl acrylate, hydroxybutyl acrylate, hydroxyethylcaprolactone acrylate, and combinations thereof, preferably from 2-ethylhexyl acrylate, n-butyl acrylate, and combinations thereof, more preferably n-butyl acrylate.

The monomer mixture may comprise (a) 65 to 95 wt.-%, preferably 70 to 93 wt.-% of the one or more than one (meth)acrylic monomer(s) that individually yield(s) a homopolymer having a glass transition temperature (Tg) of -40 °C or less; wherein the weight percentage is based on the total amount of monomers in the monomer mixture.

The one or more than one ethylenically unsaturated monomer(s) (b) may individually yield a homopolymer having a glass transition temperature (Tg) in the range of 15 °C to 150 °C, preferably in the range of 18 °C to 120 °C.

The one or more than one ethylenically unsaturated monomer(s) (b) may be selected from acrylonitrile, 3,3,5-trimethylcyclohexyl acrylate, cyclohexyl acrylate, isobornyl acrylate, octadecyl acrylate, tert-butyl acrylate, 2-phenylethyl methacrylate, benzyl methacrylate, n-butyl methacrylate, cyclohexyl methacrylate, ethyl methacrylate, glycidyl methacrylate, hexadecyl methacrylate, isobornyl methacrylate, isobutyl methacrylate, isopropyl methacrylate, methyl methacrylate, neopentyl methacrylate, octadecyl methacrylate, propyl methacrylate, tert-butyl methacrylate, styrene, methoxy styrene, 2-methyl styrene, 3-methyl styrene, 4-ethyl styrene, 4-isopropyl styrene, 4-methoxy-2-methyl styrene, 4-methoxy styrene, 4-methyl styrene, 2-chloro styrene, 4-bromo styrene, 4-chloro styrene, 4-fluoro styrene, and combinations thereof, preferably from methyl methacrylate, n-butyl methacrylate, styrene and combinations thereof, more preferably methyl methacrylate.

The monomer mixture may comprise (b) 5 to 35 wt.-%, preferably 7 to 30 wt.-% of the one or more than one ethylenically unsaturated monomer(s) that individually yield(s) a homopolymer having a Tg of 15 °C or higher; wherein the weight percentage is based on the total amount of monomers in the monomer mixture.

The one or more than one ethylenically unsaturated monomer(s) having an acid functional group (c) may be selected from ethylenically unsaturated carboxylic acid monomers, ethylenically unsaturated sulfonic acid monomers, ethylenically unsaturated phosphorous-containing acid monomers, preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinylbenzene sulfonate, 2-methyl-2-propene-1-sulfonic acid, 4-styrenesulfonic acid, 2-acrylamido-2-methyl-1-propane sulfonic acid, vinyl phosphonic acid, dimethyl vinyl phosphonate, diethyl vinyl phosphonate, diethyl allyl phosphonate, allyl phosphonic acid, and combinations thereof, more preferably from (meth)acrylic acid.

The one or more than one ethylenically unsaturated monomer(s) having a hydroxyl functional group (c) may be selected from allyl alcohol, vinyl alcohol, N-methylolacrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, preferably hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, more preferably hydroxyethyl (meth)acrylate, hydroxypropyl (meth)acrylate, hydroxybutyl (meth)acrylate, and combinations thereof.

The one or more than one ethylenically unsaturated monomer(s) having an acid and hydroxy functional group (c) may be selected from 3-allyloxy-2-hydroxy-1-propane sulfonic acid.

The monomer mixture may comprise (c) 0.2 to 4 wt.-%, preferably 0.5 to 3 wt.-% of the one or more than one ethylenically unsaturated monomer(s) having an acid and/or a hydroxyl functional group; wherein the weight percentage is based on the total amount of monomers in the monomer mixture.

The one or more than one monomer(s) having at least two ethylenically unsaturated groups (d) may be selected from diallyl phthalate, allyl (meth)acrylate, vinyl (meth)acrylate, divinyl benzene, 1,2-ethyleneglycol di(meth)acrylate, 1,4-butanediol di(meth)acrylate, 1,6-hexanediol di(meth)acrylate, and combinations thereof.

The monomer mixture may comprise (d) 0 to 0.4 wt.-%, preferably 0 to 0.2 wt.-% of the one or more than one monomer(s) having at least two ethylenically unsaturated groups; wherein the weight percentage is based on the total amount of monomers in the monomer mixture.

The chain transfer agent (e) may be selected from n-dodecyl mercaptan, carbon tetrachloride, carbon tetrabromide, bromotrichloro methane, 4-methyl benzenethiol, isooctyl 3-mercaptopropionate, tert-nonyl mercaptan, 4,4'-thiobis benzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably n-dodecyl mercaptan.

The monomer mixture may comprise (e) 0.01 to 0.40 wt.-%, preferably 0.01 to 0.25 wt.-% of the chain transfer agent; wherein the weight percentage is based on the total amount of monomers in the monomer mixture.

According to a further aspect, the invention relates to a method for preparing a pressure sensitive adhesive dispersion polymer such as discussed above comprising polymerizing a monomer mixture by emulsion polymerization to obtain a dispersion polymer, wherein the monomer mixture comprises:
(a) at least 60 wt.-% of one or more than one (meth)acrylic monomer(s) that individually yield(s) a homopolymer having a glass transition temperature (Tg) of - 40 °C or less;
(b) at least 5 wt.-% of one or more than one ethylenically unsaturated monomer(s) that individually yield(s) a homopolymer having a Tg of 15 °C or higher;
(c) 0.1 to 5 wt.-% of one or more than one ethylenically unsaturated monomer(s) having an acid and/or a hydroxyl functional group;
(d) 0 to 0.5 wt.-% of one or more than one monomer(s) having at least two ethylenically unsaturated groups; and
(e) 0.01 to 0.50 wt.-% of a chain transfer agent;

wherein monomers (a) to (d) are different from each other and the weight percentages is based on the total amount of monomers in the monomer mixture; and wherein
the dispersion polymer has a tanDelta maximum within a temperature range between -25 °C and -15 °C and
a tanDelta value at 130 °C between 0.33 and 0.60, the tanDelta being determined by Dynamic Mechanical Analysis (DMA) at an angular frequency of 10 rad/s using a parallel plate tool.

The dispersion polymer may have a tanDelta value at 130 °C between 0.34 to 0.55, preferably between 0.34 to 0.51, more preferably between 0.38 and 0.45. The one or more than one (meth)acrylic monomer(s) (a) may individually yield a homopolymer having a glass transition temperature (Tg) in the range of -65 °C to -40 °C.

The one or more than one (meth)acrylic monomer(s) (a) may be selected from 2-ethylhexyl acrylate, n-butyl acrylate, 3-methylbutyl acrylate, hexyl acrylate, heptyl acrylate, octyl acrylate, nonyl acrylate, propyl acrylate, propylheptyl acrylate, heptadecyl acrylate, decyl methacrylate, dodecyl methacrylate, isodecyl methacrylate, octyl methacrylate, lauryl methacrylate, 2-methoxyethyl acrylate, 3-methoxypropyl acrylate, 3-ethoxypropyl acrylate, 3-methoxybutyl acrylate, hydroxybutyl acrylate, hydroxyethylcaprolactone acrylate, and combinations thereof, preferably from 2-ethylhexyl acrylate, n-butyl acrylate, and combinations thereof, more preferably n-butyl acrylate.

The monomer mixture may comprise (a) 65 to 95 wt.-%, preferably 70 to 93 wt.-% of the one or more than one (meth)acrylic monomer(s) that individually yield(s) a homopolymer having a glass transition temperature (Tg) of -40 °C or less; wherein the weight percentage is based on the total amount of monomers in the monomer mixture.

The one or more than one ethylenically unsaturated monomer(s) (b) may individually yield a homopolymer having a glass transition temperature (Tg) in the range of 15 °C to 150 °C, preferably in the range of 18 °C to 120 °C.

The one or more than one ethylenically unsaturated monomer(s) (b) may be selected from acrylonitrile, 3,3,5-trimethylcyclohexyl acrylate, cyclohexyl acrylate, isobornyl acrylate, octadecyl acrylate, tert-butyl acrylate, 2-phenylethyl methacrylate, benzyl methacrylate, n-butyl methacrylate, cyclohexyl methacrylate, ethyl methacrylate, glycidyl methacrylate, hexadecyl methacrylate, isobornyl methacrylate, isobutyl methacrylate, isopropyl methacrylate, methyl methacrylate, neopentyl methacrylate, octadecyl methacrylate, propyl methacrylate, tert-butyl methacrylate, styrene, methoxy styrene, 2-methyl styrene, 3-methyl styrene, 4-ethyl styrene, 4-isopropyl styrene, 4-methoxy-2-methyl styrene, 4-methoxy styrene, 4-methyl styrene, 2-chloro styrene, 4-bromo styrene, 4-chloro styrene, 4-fluoro styrene, and combinations thereof, preferably from methyl methacrylate, n-butyl methacrylate, styrene and combinations thereof , more preferably methyl methacrylate.

The monomer mixture may comprise (b) 5 to 35 wt.-%, preferably 7 to 30 wt.-% of the one or more than one ethylenically unsaturated monomer(s) that individually yield(s) a homopolymer having a Tg of 15 °C or higher; wherein the weight percentage is based on the total amount of monomers in the monomer mixture.

The one or more than one ethylenically unsaturated monomer(s) having an acid functional group (c) may be selected from ethylenically unsaturated carboxylic acid monomers, ethylenically unsaturated sulfonic acid monomers, ethylenically unsaturated phosphorous-containing acid monomers, preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinylbenzene sulfonate, 2-methyl-2-propene-1-sulfonic acid, 4-styrenesulfonic acid, 2-acrylamido-2-methyl-1-propane sulfonic acid, vinyl phosphonic acid, dimethyl vinyl phosphonate, diethyl vinyl phosphonate, diethyl allyl phosphonate, allyl phosphonic acid, and combinations thereof, more preferably from (meth)acrylic acid.

The one or more than one ethylenically unsaturated monomer(s) having a hydroxyl functional group (c) may be selected from allyl alcohol, vinyl alcohol, N-methylolacrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, preferably hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, more preferably hydroxyethyl (meth)acrylate, hydroxypropyl (meth)acrylate, hydroxybutyl (meth)acrylate, and combinations thereof.

The one or more than one ethylenically unsaturated monomer(s) having an acid and hydroxy functional group (c) may be selected from 3-allyloxy-2-hydroxy-1-propane sulfonic acid.

The monomer mixture may comprise (c) 0.2 to 4 wt.-%, preferably 0.5 to 3 wt.-% of the one or more than one ethylenically unsaturated monomer(s) having an acid and/or a hydroxyl functional group; wherein the weight percentage is based on the total amount of monomers in the monomer mixture.

The one or more than one monomer(s) having at least two ethylenically unsaturated groups (d) may be selected from diallyl phthalate, allyl (meth)acrylate, vinyl (meth)acrylate, divinyl benzene, 1,2-ethyleneglycol di(meth)acrylate, 1,4-butanediol di(meth)acrylate, 1,6-hexanediol di(meth)acrylate, and combinations thereof.

The monomer mixture may comprise (d) 0 to 0.4 wt.-%, preferably 0 to 0.2 wt.-% of the one or more than one monomer(s) having at least two ethylenically unsaturated groups; wherein the weight percentage is based on the total amount of monomers in the monomer mixture.

The chain transfer agent (e) may be selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably n-dodecyl mercaptan.

The monomer mixture may comprise (e) 0.01 to 0.40 wt.-%, preferably 0.01 to 0.25 wt.-% of the chain transfer agent; wherein the weight percentage is based on the total amount of monomers in the monomer mixture.

Another aspect of the present invention relates to use of the pressure sensitive adhesive dispersion polymer as discussed above or obtained by the method as discussed above for the production of a pressure sensitive adhesive.

In addition, a further aspect of the present invention relates to a pressure sensitive adhesive composition comprising the pressure sensitive adhesive dispersion polymer as discussed above.

The pressure sensitive adhesive composition as discussed above may be free of any tackifier resins.

Furthermore, according to another aspect the invention relates to use of the pressure sensitive adhesive composition as discussed above for the production of a pressure sensitive adhesive sheet.

Another aspect of the present invention relates to a pressure sensitive adhesive sheet comprising a support substrate coated on one surface with the pressure sensitive adhesive composition as discussed above.

The support substrate may be a textile, a polymeric film, a foamed polymeric film or a paper. The textile may be a non-woven or woven material. The polymeric film may be a polyolefin film, polyester film, or polyvinyl chloride film.

A further aspect of the present invention relates to the use of the pressure sensitive adhesive sheet as discussed above for labeling articles, wherein the articles preferably comprise bottles and packaging, such as food packaging; and/or for stationery tape and/or double-sided tape.

Furthermore, according to another aspect, the invention relates to use of a dispersion polymer having a tanDelta maximum within a temperature range between -25 °C and -15 °C, and a tanDelta value at 130 °C between 0.33 and 0.60, the tanDelta being determined by Dynamic Mechanical Analysis (DMA) at an angular frequency of 10 rad/s using a parallel plate tool, for the production of a pressure sensitive adhesive.

### Detailed description of the invention:

The present invention relates to a pressure sensitive adhesive dispersion polymer obtained by emulsion polymerization of a monomer mixture comprising (a) at least 60 wt.-% of one or more than one (meth)acrylic monomer(s) that individually yield(s) a homopolymer having a glass transition temperature (Tg) of -40 °C or less; (b) at least 5 wt.-% of one or more than one ethylenically unsaturated monomer(s) that individually yield(s) a homopolymer having a Tg of 15 °C or higher; (c) 0.1 to 5 wt.-% of one or more than one ethylenically unsaturated monomer(s) having an acid and/or a hydroxyl functional group; (d) 0 to 0.5 wt.-% of one or more than one monomer(s) having at least two ethylenically unsaturated groups; and (e) 0.01 to 0.50 wt.-% of a chain transfer agent. The monomers (a) to (d) of the monomer mixture are different from each other and the weight percentages are based on the total amount of monomers in the monomer mixture. The pressure sensitive adhesive dispersion polymer of the present invention has a tanDelta maximum within a temperature range between -25 °C and -15 °C and a tanDelta value at 130 °C between 0.33 and 0.60. The tanDelta is determined by Dynamic Mechanical Analysis (DMA) at an angular frequency of 10 rad/s using a parallel plate tool as further described in the Examples.

As used herein, the term "tanDelta" also referred to as damping factor, dissipation factor or loss factor is defined as the ratio between the loss modulus (G") and the elastic modulus (G'). According to the present invention, the tanDelta value at 130 °C may be between 0.34 to 0.55, preferably between 0.34 to 0.51, more preferably between 0.38 and 0.45. Accordingly, the tanDelta is at least 0.33, such as at least 0.34, or at least 0.35, or at least 0.38. The tanDelta is of no more than or equal to 0.60, such as of no more than or equal to 0.58, or of no more than or equal to 0.55, or of no more than or equal to 0.53, or of no more than or equal to 0.51, or of no more than or equal to 0.48, or of no more than or equal to 0.45. A person skilled in the art will appreciate that any range between any of the explicitly disclosed lower and upper limit is herein disclosed.

The glass transition temperatures of the monomers specified above that individually yield a certain homopolymer glass transition temperature (Tg) refer to glass transition temperatures as determined by differential scanning calorimetry (DSC). The skilled person is aware in this context that DSC is only sufficiently conclusive if, after an initial heating cycle to a temperature that is at least 25 °C above the highest glass transition or melting temperature but at least 20 °C below the lowest decomposition temperature of a material, the material sample is kept at this temperature for at least 2 min. The sample is then cooled down to a temperature of at least 20 °C below the lowest glass transition or melting temperature to be determined, whereby the cooling rate should be a maximum of 20 °C/min, preferably a maximum of 10 °C/min. After a further waiting time of a few minutes, the actual measurement then takes place, during which the sample is heated to at least 20 °C above the highest melting or glass transition temperature at a heating rate of generally 10 °C/min or less. The respective highest and lowest limit temperatures can be roughly specified in simple preliminary measurements with a separate sample.

According to the present invention, the monomer mixture comprises (a) at least 60 wt.-% of one or more than one (meth)acrylic monomer(s) that individually yield(s) a homopolymer having a glass transition temperature (Tg) of -40 °C or less; wherein the weight percentage is based on the total amount of monomers in the monomer mixture. According to the present invention, the monomer mixture may comprise (a) 60 to 95 wt.-% of one or more than one (meth)acrylic monomer(s) that individually yield(s) a homopolymer having a glass transition temperature (Tg) of -40 °C or less; wherein the weight percentage is based on the total amount of monomers in the monomer mixture. The one or more than one (meth)acrylic monomer(s) (a) may individually yield a homopolymer having a Tg of -90 °C or more, such as -85 °C or more, or - 80 °C of more, or -75 °C or more, or -70 °C of more, or -65 °C or more, or -55 °C or more. A person skilled in the art will appreciate that any range between any of the explicitly disclosed lower and upper limit is herein disclosed. Accordingly, one or more than one (meth)acrylic monomer(s) (a) may individually yield a homopolymer having a Tg in the range of -90 °C to -40 °C, preferably in the range of -85 °C to -40 °C, more preferably in the range of -80 °C to -40 °C, even more preferably in the range of -75 °C to - 40 °C, most preferably in the range of -65 °C to -40 °C. The glass transition temperature can be determined by DSC as described above.

The one or more than one (meth)acrylic monomer(s) (a), which can be used in the present invention may be selected from 2-ethylhexyl acrylate, n-butyl acrylate, 3-methylbutyl acrylate, hexyl acrylate, heptyl acrylate, octyl acrylate, nonyl acrylate, propyl acrylate, propylheptyl acrylate, heptadecyl acrylate, decyl methacrylate, dodecyl methacrylate, isodecyl methacrylate, octyl methacrylate, lauryl methacrylate, 2-methoxyethyl acrylate, 3-methoxypropyl acrylate, 3-ethoxypropyl acrylate, 3-methoxybutyl acrylate, hydroxybutyl acrylate, hydroxyethylcaprolactone acrylate, and combinations thereof, preferably from 2-ethylhexyl acrylate, n-butyl acrylate, and combinations thereof, more preferably n-butyl acrylate. The one or more than one (meth)acrylic monomer(s) (a) may be n-butyl acrylate.

The one or more than one (meth)acrylic monomer(s) that individually yield(s) a homopolymer having a glass transition temperature (Tg) of -40 °C or less (a) is present in amounts of at least 60 wt.-%, such as at least 63 wt.-%, or at least 65 wt.-%, or at least 68 wt.-%, or at least 70 wt.-%, wherein the weight percentage is based on the total amount of monomers in the monomer mixture. The one or more than one (meth)acrylic monomer(s) that individually yield(s) a homopolymer having a glass transition temperature (Tg) of -40 °C or less (a) may be present in amounts of 95 wt.-% or less, such as of 93 wt.-% or less, or of 90 wt.-% or less, wherein the weight percentage is based on the total amount of monomers in the monomer mixture. A person skilled in the art will appreciate that any range between any of the explicitly disclosed lower and upper limit is herein disclosed. Thus, the monomer mixture of the present invention may comprise (a) 60 to 93 wt.-%, such as 60 to 90 wt.-%, or 65 to 90 wt.-%, of the one or more than one (meth)acrylic monomer(s) that individually yield(s) a homopolymer having a glass transition temperature (Tg) of -40 °C or less; wherein the weight percentage is based on the total amount of monomers in the monomer mixture. The monomer mixture of the present invention may comprise (a) 60 to 95 wt.-%, preferably 65 to 95 wt.-%, more preferably 70 to 93 wt.-% of the one or more than one (meth)acrylic monomer(s) that individually yield(s) a homopolymer having a glass transition temperature (Tg) of -40 °C or less; wherein the weight percentage is based on the total amount of monomers in the monomer mixture.

According to the present invention, the monomer mixture comprises (b) at least 5 wt.-% of one or more than one ethylenically unsaturated monomer(s) that individually yield(s) a homopolymer having a Tg of 15 °C or higher; wherein the weight percentage is based on the total amount of monomers in the monomer mixture. The one or more than one ethylenically unsaturated monomer(s) (b) individually yield(s) a homopolymer having a glass transition temperature (Tg) of 15 °C or more, such as of 18 °C or more. The one or more than one ethylenically unsaturated monomer(s) (b) may individually yield a homopolymer having a glass transition temperature (Tg) of 180 °C or less, such as of 150 °C or less, or of 120 °C or less. A person skilled in the art will appreciate that any range between any of the explicitly disclosed lower and upper limit is herein disclosed. Accordingly, the one or more than one ethylenically unsaturated monomer(s) (b) may individually yield a homopolymer having a glass transition temperature (Tg) in the range of 15 °C to 150 °C, preferably in the range of 15 °C to 150 °C, more preferably in the range of 18 °C to 120 °C. The glass transition temperature can be determined by DSC as described above.

The one or more than one ethylenically unsaturated monomer(s) (b), which can be used in the present invention, may be selected from acrylonitrile, 3,3,5-trimethylcyclohexyl acrylate, cyclohexyl acrylate, isobornyl acrylate, octadecyl acrylate, tert-butyl acrylate, 2-phenylethyl methacrylate, benzyl methacrylate, n-butyl methacrylate, cyclohexyl methacrylate, ethyl methacrylate, glycidyl methacrylate, hexadecyl methacrylate, isobornyl methacrylate, isobutyl methacrylate, isopropyl methacrylate, methyl methacrylate, neopentyl methacrylate, octadecyl methacrylate, propyl methacrylate, tert-butyl methacrylate, styrene, methoxy styrene, 2-methyl styrene, 3-methyl styrene, 4-ethyl styrene, 4-isopropyl styrene, 4-methoxy-2-methyl styrene, 4-methoxy styrene, 4-methyl styrene, 2-chloro styrene, 4-bromo styrene, 4-chloro styrene, 4-fluoro styrene, and combinations thereof, preferably from methyl methacrylate, n-butyl methacrylate, styrene and combinations thereof, more preferably methyl methacrylate. The one or more than one ethylenically unsaturated monomer(s) (b) may be methyl methacrylate.

The monomer mixture of the present invention comprises (b) at least 5 wt.-%, preferably 5 to 35 wt.-%, more preferably 7 to 30 wt.-% of the one or more than one ethylenically unsaturated monomer(s) that individually yield(s) a homopolymer having a Tg of 15 °C or higher; wherein the weight percentage is based on the total amount of monomers in the monomer mixture. Thus, the one or more than one ethylenically unsaturated monomer(s) that individually yield(s) a homopolymer having a Tg of 15 °C or higher (b) is present in amounts of at least 5 wt.-%, such as at least 6 wt.-%, or at least 7 wt.-%, or at least 9 wt.-%, wherein the weight percentage is based on the total amount of monomers in the monomer mixture. The one or more than one ethylenically unsaturated monomer(s) that individually yield(s) a homopolymer having a Tg of 15 °C or higher (b) is present in amounts of 40 wt.-% or less, such as of 37 wt.-% or less, or of 35 wt.-% or less, or of 33 wt.-% or less, or of 30 wt.-% or less, wherein the weight percentage is based on the total amount of monomers in the monomer mixture. A person skilled in the art will appreciate that any range between any of the explicitly disclosed lower and upper limit is herein disclosed. Thus, the monomer mixture of the present invention may comprise (b) 5 to 35 wt.-%, such as 5 to 33 wt.-%, or 5 to 30 wt.-%, or 6 to 30 wt.-%, or 7 to 30 wt.-% of the one or more than one ethylenically unsaturated monomer(s) that individually yield(s) a homopolymer having a Tg of 15 °C or higher; wherein the weight percentage is based on the total amount of monomers in the monomer mixture.

According to the present invention, the monomer mixture comprises (c) 0.1 to 5 wt.-% of one or more than one ethylenically unsaturated monomer(s) having an acid and/or a hydroxyl functional group. The monomer mixture may comprise (c) 0.1 to 5 wt.-% of one or more than one ethylenically unsaturated monomer(s) having an acid functional group. The monomer mixture may comprise (c) 0.1 to 5 wt.-% of one or more than one ethylenically unsaturated monomer(s) having a hydroxyl functional group. The monomer mixture may comprise (c) 0.1 to 5 wt.-% of one or more than one ethylenically unsaturated monomer(s) having an acid and a hydroxyl functional group. The weight percentage is based on the total amount of monomers in the monomer mixture.

The one or more than one ethylenically unsaturated monomer(s) having an acid functional group (c), which can be used in the present invention, may be selected from ethylenically unsaturated carboxylic acid monomers, ethylenically unsaturated sulfonic acid monomers, ethylenically unsaturated phosphorous-containing acid monomers. The ethylenically unsaturated carboxylic acid monomers suitable for use in the present invention may include monocarboxylic acid and dicarboxylic acid monomers, monoesters of dicarboxylic acid, carboxy alkyl esters of ethylenically unsaturated acids such as 2-carboxy ethyl (meth)acrylate, and ethylenically unsaturated carboxylic acid derivatives such as ethylenically unsaturated dicarboxylic acid anhydrides. Carrying out the present invention, it is preferable to use ethylenically unsaturated aliphatic mono- or dicarboxylic acids or anhydrides which contain from 3 to 5 carbon atoms. Examples of monocarboxylic acid monomers include (meth)acrylic acid, crotonic acid and examples of dicarboxylic acid monomers including fumaric acid, itaconic acid, maleic acid and maleic anhydride. Examples of other suitable ethylenically unsaturated acids include vinyl acetic acid, vinyl lactic acid, vinyl sulfonic acid, 2-methyl-2-propene-1-sulfonic acid, styrene sulfonic acid, 2-acrylamido-2-methyl-1-propane sulfonic acid and the salts thereof.

Examples of ethylenically unsaturated sulfonic acid monomers include vinyl sulfonic acid, phenyl vinyl sulfonate, sodium 4-vinylbenzene sulfonate, 2-methyl-2-propene-1-sulfonic acid, 4-styrenesulfonic acid, 3-allyloxy-2-hydroxy-1-propanesulfonic acid, 2-acrylamido-2-methyl-1-propane sulfonic acid and the salts thereof.

Examples of ethylenically unsaturated phosphorus-containing acid monomers include vinyl phosphonic acid, dimethyl vinyl phosphonate, diethyl vinyl phosphonate, diethyl allyl phosphonate, allyl phosphonic acid and the salts thereof.

Preferably, the one or more than one ethylenically unsaturated monomer(s) having an acid functional group (c) is selected from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinylbenzenesulfonate, 2-methyl-2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allyl phosphonate, allyl phosphonic acid, and combinations thereof, more preferably from (meth)acrylic acid. The one or more than one ethylenically unsaturated monomer(s) having an acid functional group (c) may be (meth)acrylic acid.

The one or more than one ethylenically unsaturated monomer(s) having a hydroxyl functional group (c), which can be used in the present invention, may be selected from allyl alcohol, vinyl alcohol, N-methylolacrylamide, 1-penten-3-ol, hydroxyalkyl esters of ethylenically unsaturated acids and combinations thereof, preferably hydroxyalkyl esters of ethylenically unsaturated acids.

The hydroxyalkyl esters of ethylenically unsaturated acids may include hydroxyalkyl acrylate and methacrylate monomers which are based on ethylene oxide, propylene oxide and higher alkylene oxides or mixtures thereof. Suitable examples of hydroxyalkyl esters of ethylenically unsaturated acids may be selected from hydroxyethyl (meth)acrylate, hydroxypropyl (meth)acrylate, hydroxybutyl (meth)acrylate, hydroxyethylcaprolactone acrylate, and combinations thereof.

The one or more than one ethylenically unsaturated monomer(s) having an acid and a hydroxyl functional group (c), which can be used in the present invention, may be selected from 3-allyloxy-2-hydroxy-1-propane sulfonic acid.

The one or more than one ethylenically unsaturated monomer(s) having an acid and/or a hydroxyl functional group (c), which can be used in the present invention, may be selected from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinylbenzenesulfonate, 2-methyl-2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allyl phosphonate, allyl phosphonic acid, allyl alcohol, vinyl alcohol, N-methylolacrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and 3-allyloxy-2-hydroxy-1-propane sulfonic acid, preferably (meth)acrylic acid, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, more preferably (meth)acrylic acid, hydroxyethyl (meth)acrylate, hydroxypropyl (meth)acrylate, hydroxybutyl (meth)acrylate, and combinations thereof.

The monomer mixture of the present invention comprises (c) 0.1 to 5.0 wt.-%, preferably 0.2 to 4.0 wt.-%, more preferably 0.5 to 3.0 wt.-% of the one or more than one ethylenically unsaturated monomer(s) having an acid and/or a hydroxyl functional group; wherein the weight percentage is based on the total amount of monomers in the monomer mixture. Thus, the one or more than one ethylenically unsaturated monomer(s) having an acid and/or a hydroxyl functional group (c) is present in amounts of at least 0.1 wt.-%, such as at least 0.2 wt.-%, or at least 0.3 wt.-%, or at least 0.4 wt.-%, or at least 0.5 wt.-%, or at least 0.6 wt.-%, or at least 0.7 wt.-%, wherein the weight percentage is based on the total amount of monomers in the monomer mixture. The one or more than one ethylenically unsaturated monomer(s) having an acid and/or a hydroxyl functional group (c) is present in amounts of 5.0 wt.-% or less, such as of 4.5 wt.-% or less, or of 4.0 wt.-% or less, or of 3.5 wt.-% or less, or of 3.0 wt.-% or less, wherein the weight percentage is based on the total amount of monomers in the monomer mixture. A person skilled in the art will appreciate that any range between any of the explicitly disclosed lower and upper limit is herein disclosed.

In case the monomer mixture of the present invention comprises (c) one or more than one ethylenically unsaturated monomer(s) having an acid functional group, the one or more than one ethylenically unsaturated monomer(s) having an acid functional group may be present in an amount of 0.1 to 2.6 wt.-%, preferably 0.1 to 2.5 wt.-%, more preferably 0.5 to 2.5 wt.-%, wherein the weight percentage is based on the total amount of monomers in the monomer mixture. Alternatively, in case the monomer mixture of the present invention comprises (c) one or more than one ethylenically unsaturated monomer(s) having an acid functional group, the one or more than one ethylenically unsaturated monomer(s) having an acid functional group may be present in an amount of 2.8 to 5.0 wt.-%, preferably 3.0 to 5.0 wt.-%, more preferably 3.0 to 4.5 wt.-%, wherein the weight percentage is based on the total amount of monomers in the monomer mixture.

According to the present invention, the monomer mixture of the present invention may comprise 0.1 to 2.6 wt.-%, preferably 0.1 to 2.5 wt.-%, more preferably 0.5 to 2.5 wt.-% of one or more than one ethylenically unsaturated monomer(s) having an acid functional group, wherein the weight percentage is based on the total amount of monomers in the monomer mixture. The monomer mixture of the present invention may comprise 2.8 to 5.0 wt.-%, preferably 3.0 to 5.0 wt.-%, more preferably 3.0 to 4.5 wt.-% of one or more than one ethylenically unsaturated monomer(s) having an acid functional group, wherein the weight percentage is based on the total amount of monomers in the monomer mixture.

According to the present invention, the monomer mixture comprises (d) 0 to 0.5 wt.-%, preferably 0 to 0.4 wt.-%, more preferably 0 to 0.2 wt.-% of the one or more than one monomer(s) having at least two ethylenically unsaturated groups; wherein the weight percentage is based on the total amount of monomers in the monomer mixture. Thus, the one or more than one monomer(s) having at least two ethylenically unsaturated groups (d) is present in amounts of 0.5 wt.-% or less, such as of 0.4 wt.-% or less, or of 0.3 wt.-% or less, or of 0.2 wt.-% or less, or of 0.1 wt.-% or less, wherein the weight percentage is based on the total amount of monomers in the monomer mixture.

The one or more than one monomer(s) having at least two ethylenically unsaturated groups (d), which can be used in the present invention, may be selected from diallyl phthalate, allyl (meth)acrylate, vinyl (meth)acrylate, divinyl benzene, 1,2-ethyleneglycol di(meth)acrylate, 1,4-butanediol di(meth)acrylate, 1,6-hexanediol di(meth)acrylate, and combinations thereof.

The monomer mixture of the present invention comprises (e) 0.01 to 0.50 wt.-%, preferably 0.01 to 0.40 wt.-%, more preferably 0.01 to 0.25 wt.-% of a chain transfer agent; wherein the weight percentage is based on the total amount of monomers in the monomer mixture. Thus, the chain transfer agent (e) is present in amounts of at least 0.01 wt.-%, such as at least 0.02 wt.-%, or at least 0.03 wt.-%, wherein the weight percentage is based on the total amount of monomers in the monomer mixture. The chain transfer agent (e) is present in amounts of 0.50 wt.-% or less, such as of 0.45 wt.-% or less, or of 0.40 wt.-% or less, or of 0.35 wt.-% or less, or of 0.30 wt.-% or less, or of 0.25 wt.-% or less, or of 0.20 wt.-% or less, wherein the weight percentage is based on the total amount of monomers in the monomer mixture. A person skilled in the art will appreciate that any range between any of the explicitly disclosed lower and upper limit is herein disclosed.

The chain transfer agent (e), which can be used in the present invention, may be selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably n-dodecyl mercaptan. The chain transfer agent (e) may be n-dodecyl mercaptan.

According to the present invention, the amounts of the above-defined monomers for the preparation of pressure sensitive adhesive dispersion polymer may add up to 100 wt.-%, based on the total amount of monomers in the monomer mixture. The present invention further relates to use of a dispersion polymer having a tanDelta maximum within a temperature range between -25 °C and -15 °C, and a tanDelta value at 130 °C between 0.33 and 0.60 for the production of a pressure sensitive adhesive. The tanDelta is determined by Dynamic Mechanical Analysis (DMA) at an angular frequency of 10 rad/s using a parallel plate tool as further described I the Examples.

According to the present invention, the tanDelta value at 130 °C of the dispersion polymer may be between 0.34 to 0.55, preferably between 0.34 to 0.51, more preferably between 0.38 and 0.45. Accordingly, the tanDelta is at least 0.33, such as at least 0.34, or at least 0.35, or at least 0.38. The tanDelta is of no more than or equal to 0.60, such as of no more than or equal to 0.58, or of no more than or equal to 0.55, or of no more than or equal to 0.53, or of no more than or equal to 0.51, or of no more than or equal to 0.48, or of no more than or equal to 0.45. A person skilled in the art will appreciate that any range between any of the explicitly disclosed lower and upper limit is herein disclosed.

The dispersion polymer is obtained by polymerizing by emulsion polymerization of a monomer mixture, wherein the monomer mixture comprises:
(a) at least 60 wt.-% of one or more than one (meth)acrylic monomer(s) that individually yield(s) a homopolymer having a glass transition temperature (Tg) of - 40 °C or less;
(b) at least 5 wt.-% of one or more than one ethylenically unsaturated monomer(s) that individually yield(s) a homopolymer having a Tg of 15 °C or higher;
(c) 0.1 to 5 wt.-% of one or more than one ethylenically unsaturated monomer(s) having an acid and/or a hydroxyl functional group;
(d) 0 to 0.5 wt.-% of one or more than one monomer(s) having at least two ethylenically unsaturated groups; and
(e) 0.01 to 0.50 wt.-% of a chain transfer agent;
wherein monomers (a) to (d) are different from each other and the weight percentages is based on the total amount of monomers in the monomer mixture. All variations with respect to the compounds used for the preparation of the pressure sensitive adhesive dispersion polymer of the present invention and their relative amounts can be as described above.

It has surprisingly been found that the polymer dispersion of the present invention provides a good repulsion resistance and a well-balanced adhesion as well as cohesion, particularly if used as an adhesive label or sheet placed on curved substrates posing a static repulsion stress on the adhesive.

### Method for preparing a pressure sensitive adhesive dispersion polymer of the present invention

The present invention relates to a method for preparing a pressure sensitive adhesive dispersion polymer, which comprises polymerizing by emulsion polymerization of a monomer mixture to obtain a dispersion polymer, wherein the monomer mixture comprises:
(a) at least 60 wt.-% of one or more than one (meth)acrylic monomer(s) that individually yield(s) a homopolymer having a glass transition temperature (Tg) of - 40 °C or less;
(b) at least 5 wt.-% of one or more than one ethylenically unsaturated monomer(s) that individually yield(s) a homopolymer having a Tg of 15 °C or higher;
(c) 0.1 to 5 wt.-% of one or more than one ethylenically unsaturated monomer(s) having an acid and/or a hydroxyl functional group;
(d) 0 to 0.5 wt.-% of one or more than one monomer(s) having at least two ethylenically unsaturated groups; and
(e) 0.01 to 0.50 wt.-% of a chain transfer agent;
wherein monomers (a) to (d) are different from each other and the weight percentages are based on the total amount of monomers in the monomer mixture; and wherein the dispersion polymer has a tanDelta maximum within a temperature range between -25 °C and -15 °C and a tanDelta value at 130 °C between 0.33 and 0.60. The tanDelta is determined by Dynamic Mechanical Analysis (DMA) at an angular frequency of 10 rad/s using a parallel plate tool as further described in the Examples.

According to the present invention, the tanDelta value at 130 °C may be between 0.34 to 0.55, preferably between 0.34 to 0.51, more preferably between 0.38 and 0.45. Accordingly, the tanDelta is at least 0.33, such as at least 0.34, or at least 0.35, or at least 0.38. The tanDelta is of no more than or equal to 0.60, such as of no more than or equal to 0.58, or of no more than or equal to 0.55, or of no more than or equal to 0.53, or of no more than or equal to 0.51, or of no more than or equal to 0.48, or of no more than or equal to 0.45. A person skilled in the art will appreciate that any range between any of the explicitly disclosed lower and upper limit is herein disclosed.

All variations with respect to the compounds used for the preparation of the pressure sensitive adhesive dispersion polymer of the present invention and their relative amounts can be as described above.

The pressure sensitive adhesive dispersion polymer according to the present invention can be made by any emulsion polymerization process known to a person skilled in the art, provided that the monomer mixture as herein defined is employed.

In the emulsion polymerization for preparing the pressure sensitive adhesive dispersion polymer of the present invention, a seed dispersion may be employed. Any seed particles as known to the person skilled in the art can be used.

The seed particles are preferably present in an amount of 0.01 to 10 parts by weight, preferably 0.1 to 5 parts by weight, based on 100 parts by weight of total ethylenically unsaturated monomers employed in the polymer. The lower limit of the amount of seed particles therefore can be 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, or 2.5 parts by weight. The upper limit of the amount can be 10, 9, 8, 7, 6, 5.5, 5, 4.5, 4, 3.8, 3.6, 3.4, 3.3, 3.2, 3.1 or 3 parts by weight. A person skilled in the art will understand that any range formed by any of the explicitly disclosed lower limits and upper limits is explicitly encompassed in the present specification.

The process for the preparation of the above-described pressure sensitive adhesive dispersion polymer can be performed at temperatures of from 0 to 130 °C, preferably of from 0 to 100 °C, particularly preferably of from 20 to 95 °C, very particularly preferably of from 40 to 90 °C, in the presence of no or one or more emulsifiers, no or one or more protective colloids and one or more initiators. The temperature includes all values and sub-values therebetween, especially including 5, 10, 15, 20, 25, 30, 35, 40, 45, 50, 55, 60, 65, 70, 75, 80, 85, 90, 95, 100, 105, 110, 115, 120 and 125 °C.

Initiators which can be used when carrying out the present invention may include water-soluble and/or oil-soluble initiators which are effective for the purposes of the polymerization. Representative initiators are well known in the technical area and include, for example: azo compounds (such as, for example, **AIBN, AMBN** and cyanovaleric acid) and inorganic peroxy compounds, such as hydrogen peroxide, sodium, potassium and ammonium peroxydisulfate, peroxycarbonates and peroxyborates, as well as organic peroxy compounds, such as alkyl hydroperoxides, dialkyl peroxides, acyl hydroperoxides, and diacyl peroxides, as well as esters, such as tert-butyl perbenzoate and combinations of inorganic and organic initiators. Suitable initiators may be selected from 2,3-dimethyl-2,3-diphenylbutane, tert-butyl hydroperoxide, tert-amyl hydroperoxide, cumyl hydroperoxide, 1,1,3,3-tetramethylbutyl hydroperoxide, isopropylcumyl hydroperoxide, p-menthane hydroperoxide, 2,5-di(tert-butylperoxy)-2,5-dimethyl-3-hexyne, 3,6,9-triethyl-3,6,9-trimethyl-1,4,7-triperoxonane, di(tert-butyl)peroxide, 2,5-dimethyl-2,5-di(tert-butylperoxy)hexane, di(tert-butylperoxyisopropyl)benzene, tert-butyl cumyl peroxide, di-(tert-amyl)-peroxide, dicumyl peroxide, butyl 4,4-di(tert-butylperoxy)valerate, tert-butylperoxybenzoate, 2,2-di(tert-butylperoxy)butane, tert-amyl peroxy-benzoate, tert-butylperoxy-acetate, tert-butylperoxy-(2-ethylhexyl)carbonate, tert-butylperoxy isopropyl carbonate, tert-butyl peroxy-3,5,5-trimethyl-hexanoate, 1,1-di(tert-butylperoxy)cyclohexane, tert-amyl peroxyacetate, tert-amylperoxy-(2-ethylhexyl)carbonate, 1,1-di(tert-butylperoxy)-3,5,5-trimethylcyclohexane, 1,1-di(tert-amylperoxy)cyclohexane, tert-butyl-monoperoxy-maleate, 1,1'-azodi(hexahydrobenzonitrile), tert-butyl peroxyisobutyrate, tert-butyl peroxydiethylacetate, tert-butyl peroxy-2-ethylhexanoate, dibenzoyl peroxide, tert-amyl peroxy-2-ethylhexanoate, di(4-methylbenzoyl)peroxide, 1,1,3,3-tetramethylbutyl peroxy-2-ethylhexanoate, ammonium peroxodisulfate, 2,5-dimethyl-2,5-di(2-ethylhexanoylperoxy)hexane, 2,2'-azodi(2-methylbutyronitrile), 2,2'-azodi(isobutyronitrile), didecanoyl peroxide, potassium persulfate, dilauroyl peroxide, di(3,5,5-trimethylhexanoyl) peroxide, tert-amyl peroxypivalate, tert-butyl peroxyneoheptanoate, 1,1,3,3-tetramethylbutyl peroxypivalate, tert-butyl peroxypivalate, dicetyl peroxydicarbonate, dimyristyl peroxydicarbonate, di(2-ethylhexyl) peroxydicarbonate, di(4-tert-butylcyclohexyl) peroxydicarbonate, diisopropyl peroxydicarbonate, tert-butyl peroxyneodecanoate, di-sec-butyl peroxydicarbonate, tert-amyl peroxyneodecanoate, cumyl peroxyneoheptanoate, di(3-methoxybutyl) peroxydicarbonate, 1,1,3,3-tetramethylbutyl peroxyneodecanoate, cumyl peroxyneodecanoate, diisobutyryl peroxide, and mixture thereof.

The initiator may be used in a sufficient amount to initiate the polymerization reaction at a desired rate. In general, an amount of initiator of from 0.01 to 5 wt.-%, preferably of from 0.1 to 4 wt.-%, based on the total weight of monomers in the monomer mixture, is sufficient. The amount of initiator is most preferably of from 0.01 to 2 wt.-%, based on the total weight of monomers in the monomer mixture. The amount of initiator includes all values and sub-values therebetween, especially including 0.01, 0.1, 0.5, 1, 1.5, 2, 2.5, 3, 4 and 4.5 wt.-%, based on the total weight of monomers in the monomer mixture.

The above-mentioned inorganic and organic peroxy compounds may also be used alone or in combination with one or more suitable reducing agents, as is well known in the art. Examples of such reducing agents may include sulfur dioxide, alkali metal disulfites, alkali metal and ammonium hydrogen sulfites, thiosulfates, dithionites and formaldehyde sulfoxylates, as well as hydroxylamine hydrochloride, hydrazine sulfate, iron (II) sulfate, cuprous naphthanate, glucose, sulfonic acid compounds such as sodium methane sulfonate, amine compounds such as dimethylaniline and ascorbic acid. The quantity of the reducing agent is preferably 0.03 to 10 parts by weight per part by weight of the polymerization initiator.

Surfactants or emulsifiers which are suitable for stabilizing the dispersion polymer may include those conventional surface-active agents for polymerization processes. The surfactant or surfactants can be added to the aqueous phase and/or the monomer phase. An effective amount of surfactant in a seed process is the amount which was chosen for supporting the stabilization of the particle as a colloid, the minimization of contact between the particles and the prevention of coagulation. In a non-seeded process, an effective amount of surfactant is the amount which was chosen for determining the particle size.

Representative surfactants include saturated and ethylenically unsaturated sulfonic acids or salts thereof, including, for example, unsaturated hydrocarbonsulfonic acid, such as vinylsulfonic acid, allylsulfonic acid and methallylsulfonic acid, and salts thereof; aromatic hydrocarbon acids, such as, for example, p-styrenesulfonic acid, isopropenylbenzenesulfonic acid and vinyloxybenzenesulfonic acid and salts thereof; sulfoalkyl esters of acrylic acid and methacrylic acid, such as, for example, sulfoethyl methacrylate and sulfopropyl methacrylate and salts thereof, and 2-acrylamido-2-methylpropanesulfonic acid and salts thereof; alkylated diphenyl oxide disulfonates, sodium dodecylbenzenesulfonates and dihexyl or dioctyl esters of sodium sulfosuccinate, sodium alkyl esters of sulfonic acid, ethoxylated alkylphenols and ethoxylated alcohols; fatty alcohol sulfates and fatty alcohol (poly)ether sulfates.

The type and the amount of the surfactant is governed typically by the number of particles, their size and their composition. Typically, the surfactant is used in amounts of from 0 to 20 wt.-%, preferably from 0 to 10 wt.-%, more preferably from 0 to 5 wt.-%, based on the total weight of the monomers in the monomer mixture. The amount of surfactant includes all values and sub-values therebetween, especially including 0, 0.1, 0.5, 1, 2, 3, 4, 5, 6, 7, 8, 9, 10, 11, 12, 13, 14, 15, 16, 17, 18 and 19 wt.-%, based on the total weight of the monomer in the monomer composition. The polymerization may be conducted without using surfactants.

Alternatively, protective colloids can also be used instead of or in addition to the surfactants described above. As used herein, the term "protective colloids" refers generally to water-soluble polymer compounds to which are employed for stabilizing finely dispersed polymer particles. The protective colloids can surround the particles with a film, and due to its, e.g., spatial expansion, prevents the particles from approaching each other and thus from flocculating or coagulating. Suitable colloids include polyhydroxy compounds, such as polyvinyl alcohol, partially acetylated polyvinyl alcohol, casein, hydroxyethyl starch, carboxymethyl cellulose, hydroxyethyl cellulose, hydroxypropyl cellulose, polysaccharides, and degraded polysaccharides, polyethylene glycol, polyvinyl pyrrolidone, ethylene glycol-propylene glycol block copolymers and gum arabic. The preferred protective colloids are carboxymethyl cellulose, hydroxyethyl cellulose and hydroxypropyl cellulose. In general, these protective colloids are used in contents of from 0 to 10, preferably from 0 to 5, more preferably from 0 to 3 parts by weight, based on the total weight of the monomers. The amount of protective colloids includes all values and sub-values therebetween, especially including 1, 2, 3, 4, 5, 6, 7, 8 and 9 wt.-%, based on the total weight of the monomers.

### Pressure sensitive adhesive composition

The present invention relates to use of the pressure sensitive adhesive dispersion polymer as described above or obtained by the method as described above for the production of a pressure sensitive adhesive.

Furthermore, the present invention relates to a pressure sensitive adhesive composition comprising the pressure sensitive adhesive dispersion polymer as described above.

All variations with respect to the compounds used for the preparation of the pressure sensitive adhesive dispersion polymer of the present invention and their relative amounts can be as described above.

According to the present invention, the pressure sensitive adhesive composition may comprise a tackifier resin in addition to the pressure sensitive adhesive dispersion polymer of the present invention. As the tackifier resin, one, two or more species can be used, selected from various known tackifier resins such as rosin-based resins, terpene resins, modified terpene resins, phenolic resins, petroleum resins, styrene-based resins, coumarone-indene resins, ketone-based resins, and combinations thereof.

The term "rosin-based rosin" refers to both a rosin and a rosin-derived resin. Examples of a rosin may include unmodified rosins (raw rosins) such as gum rosin, wood rosin or tall-oil rosin, and modified rosins obtainable from the unmodified rosins via modifications such as hydrogenation, disproportionation or polymerization. Suitable examples of a rosin-derived resin include rosin esters such as an unmodified rosin ester which is an ester of an unmodified rosin and an alcohol, and a modified rosin ester which is an ester of a modified rosin and an alcohol; an unsaturated fatty acid-modified rosin obtainable by modifying a rosin with an unsaturated fatty acid; an unsaturated fatty acid-modified rosin ester obtainable by modifying a rosin ester with an unsaturated fatty acid; rosin alcohols obtainable by reduction of carboxyl groups in rosins or aforementioned various rosin derivatives (including rosin esters, unsaturated fatty acid-modified rosin, and an unsaturated fatty acid-modified rosin ester); metal salts of rosins or aforementioned various rosin derivatives. Suitable examples of a terpene resin include terpenes (typically monoterpenes) such as α-pinene, ß-pinene, d-limonene, I-limonene and dipentene. Suitable examples of a modified terpene resin include resins obtainable by modifying the terpene resins, such as styrene-modified terpene resins or hydrogenated terpene resins. Suitable examples of a phenolic resin include a terpene-phenol resin, a hydrogenated terpene-phenol resin, an alkylphenol resin and a rosin-phenol resin.

According to the present invention, the pressure sensitive adhesive composition may comprise 2 to 80 parts by weight, preferably 5 to 60 parts by weight, more preferably 10 to 45 parts by weight of a tackifier resin relative to 100 parts by weight of the pressure sensitive adhesive dispersion polymer of the present invention. Thus, the pressure sensitive adhesive composition may comprise at least 2 parts by weight, such as at least 5 parts by weight, or at least 10 parts by weight, or at least 15 parts by weight of a tackifier resin relative to 100 parts by weight of the pressure sensitive adhesive dispersion polymer of the present invention. The pressure sensitive adhesive composition may comprise 80 parts by weight or less, such as 75 parts by weight or less, or 60 parts by weight or less, or 55 parts by weight or less, or 50 parts by weight or less, or 45 parts by weight or less, or 40 parts by weight or less, or 35 parts by weight or less of a tackifier resin relative to 100 parts by weight of the pressure sensitive adhesive dispersion polymer of the present invention. A person skilled in the art will appreciate that any range between any of the explicitly disclosed lower and upper limit is herein disclosed.

Preferably, the pressure sensitive adhesive composition of the present invention may be free of any tackifier resins. The pressure sensitive adhesive composition of the present invention may be substantially free of any tackifier resins. As used herein, the term "substantially free" means that a tackifier resin is present, if at all, as an incidental impurity, such as in an amount of less than 0.04 wt.-%, based on the total weight of the pressure sensitive adhesive composition. According to the present invention, the pressure sensitive adhesive composition of the present invention may be completely free of any tackifier resins. As used herein, the term "completely free" means that a tackifier resin is not present in the pressure sensitive adhesive composition at all.

It was surprisingly found that the pressure sensitive adhesive compositions comprising the pressure sensitive adhesive dispersion polymer of the present invention provides for good repulsion resistance without the use of any tackifier resin.

The pressure sensitive adhesive composition may further comprise light stabilizers or ageing inhibitors. Ageing inhibitors may be products based on sterically hindered phenols, phosphites, thiosynergists, sterically hindered amines or UV absorber. The ageing inhibitors may comprise cresol derivatives whose aromatic ring is substituted at two arbitrary, different locations, preferably in ortho- and meta-position relative to the OH group, by thioalkyl chains. Suitable examples of ageing inhibitors include 4,6-bis(dodecylthiomethyl)-o-cresol, 4,6-bis(undecylthiomethyl)-o-cresol, 4,6-bis(decyl-thiomethyl)-o-cresol 4,6-bis(nonylthiomethyl)-o-cresol or 4,6-bis(octylthiomethyl)-o-cresol. The pressure sensitive adhesive composition of the present invention may comprise light stabilizers or ageing inhibitors in amounts in a range of from 0.1 to 10 wt.-%, preferably from 0.2 to 5 wt.-%, more preferably from 0.5 to 3 wt.-%, based on the total solids content of the pressure sensitive adhesive composition.

The pressure sensitive adhesive composition may further comprise rheological additives (thickeners), defoamers, deaerating agents, wetting agents, flow control agents, and combinations thereof. The pressure sensitive adhesive composition of the present invention may comprise rheological additives (thickeners), defoamers, deaerating agents, wetting agents, flow control agents, and combinations thereof, in amounts in a range of from 0.1 to 5 wt.-%, based on the total solids content of the pressure sensitive adhesive composition.

The pressure sensitive adhesive composition may also comprise fillers such as silicon dioxides, glass in the form of solid or hollow beads, microballoons, calcium carbonates, zinc oxides, titanium dioxides, aluminum oxides, aluminum oxide hydroxides, and combinations thereof. According to the present invention, the pressure sensitive adhesive composition of the present invention may comprise fillers in amounts in a range of from 0.1 to 20 wt.-%, based on the total solids content of the pressure sensitive adhesive composition.

The pressure sensitive adhesive composition of the present invention preferably is aqueous. Non-aqueous solvents may be employed in the pressure sensitive adhesive composition of the invention in small amount if desired. The amount of non-aqueous solvents may be 3 wt.-% or less, preferably 2 wt.-% or less, more preferably 1.5 wt.-% or less, most preferably 1 wt.-% or less, and in particular 0.5 wt. or less based on the solids content of the pressure sensitive adhesive composition. Examples of suitable non-aqueous solvents include, but are not limited to, toluene, acetone, methylethylketone, cyclohexane, ethylene glycol dimethyl ether, ethylene glycol diethyl ether, ethylene glycol methyl ether, diethylene glycol dimethyl ether, diethylene glycol diethyl ether, diethylene glycol methyl ether, dimethylformamide, dimethyl sulfoxide, monohydric alcohols such as methanol and ethanol, and polyhydric alcohols. The pressure sensitive adhesive composition is preferably free of non-aqueous solvents.

### Pressure sensitive adhesive sheet

The present invention relates to use of the pressure sensitive adhesive composition as described above for the production of a pressure sensitive adhesive sheet.

Furthermore, the present invention relates to a pressure sensitive adhesive sheet comprising a support substrate coated at least on one surface with the pressure sensitive adhesive composition as described above. According to the present invention, the support substrate may additionally be coated with the pressure sensitive adhesive composition of the present invention on the surface opposite to the surface of the support substrate coated with the pressure sensitive adhesive composition.

The pressure sensitive adhesive composition may be applied directly onto the support substrate and allowed to dry to form a pressure sensitive adhesive layer. Alternatively, the pressure sensitive adhesive composition may be applied onto a highly releasable surface, e.g., a release liner's surface, agent-treated back face of a support layer, and allowed to dry to form a PSA layer on the surface, and the pressure sensitive adhesive layer is transferred to a support substrate. The pressure sensitive adhesive layer can be applied with any known method and commonly used coater, such as a gravure coater, reverse roll coater, kiss roll coater, dip roll coater, bar coater, knife coater, spray coater, curtain coater and the like. The pressure sensitive adhesive layer of the present invention is typically formed continuously. Depending on the purpose and application, the pressure sensitive adhesive layer may be formed in a regular or random pattern of dots, stripes, and the like.

The pressure sensitive adhesive composition may be applied on the surface of the support substrate at a coating weight in an amount in a range of from 2 and 200 g/m², preferably from 5 and 130 g/m², more preferably from 10 and 100 g/m², based on the surface area of the support substrate. The coating weight may be of at least 2 g/m², such as at least 5 g/m², or at least 10 g/m², or at least 20 g/m², based on the surface area of the support substrate. The coating weight may be 200 g/m² or less, such as 150 g/m² or less, or 130 g/m² or less, or 120 g/m² or less, or 100 g/m² or less, based on the surface area of the support substrate. The person skilled in the art will appreciate that any range between any of the explicitly disclosed lower and upper limit is herein disclosed.

According to the present invention, the support substrate may be a textile, a polymeric film, a foamed polymeric film, or a paper. The thickness of the support substrate can be suitably selected depending on the purpose. The support substrate typically has a thickness in a range of from 2 to 1000 µm, such as from 10 to 500 µm, or from 20 to 300 µm. Accordingly, the support substrate may have a thickness of at least 2 µm, such as at least 5 µm, or at least 10 µm, or at least 20 µm, or at least 30 µm, or at least 50 µm. The support substrate may have a thickness of 1000 µm or less, such as 500 µm or less, or 400 µm or less, or 300 µm or less, or 250 µm or less, or 200 µm or less, or 150 µm or less. A person skilled in the art will appreciate that any range between any of the explicitly disclosed lower and upper limit is herein disclosed. The surface on which the pressure sensitive adhesive composition is applied to form the pressure sensitive adhesive layer may be subjected to a surface treatment such as a primer coating or a corona discharge treatment.

The polymeric film may be a polyolefin film, polyester film, or polyvinyl chloride film. A polyolefin sheet may comprise as the primary component a polyolefin such as a polyethylene or polypropylene or an ethylene-propylene copolymer. A polyester film may comprise as the primary component a polyester such as polyethylene terephthalate (PET) or a polybutylene terephthalate. A polyvinyl chloride film may comprise as the primary component a polyvinyl chloride. The plastic film according to the present invention can be a non-stretched film or a stretched film, such as a uni-axially stretched of bi-axially stretched film. According to the present invention, the plastic film may have a thickness in a range of between 5 to 200 µm, such as from 10 to 100 µm.

The textile may be a non-woven or woven material. The non-woven or woven material of the present invention may be of a single fibrous material or a blend of various fibrous materials. Suitable examples of a non-woven material include non-woven material constituted with natural fibers including pulp such as wood pulp, cotton, hemp, and combinations thereof; synthetic fibers including polyester fibers such as polyethylene terephthalate (PET) fibers, rayon, vinylon, acetate fibers, polyvinyl alcohol (PVA) fibers, polyamide fibers, polyolefin fibers, polyurethane fibers, and combinations thereof; and combinations thereof. According to the present invention, the textile, preferably the non-woven or woven material may have a thickness in a range of between 10 to 300 µm, such as from 20 to 250 µm, or from 50 to 200 µm.

The foamed polymeric film may be formed of a foam such as a polyurethane foam, a polyethylene foam, polyacrylate foam or a polychloroprene foam. According to the present invention, the foamed polymeric film may have a thickness in a range of between 10 to 500 µm, such as from 20 to 300 µm.

According to the present invention, the paper may have a thickness in a range of between 20 to 200 µm, such as from 30 to 150 µm.

The present invention further relates to use of the pressure sensitive adhesive sheet of the present invention for labeling articles and/or for stationery tape and/or double-sided tape. The labeling articles may be flat or curved articles comprising bottles and packaging, such as food packaging.

The present invention will be further illustrated with reference to the following examples.

### EXAMPLES:

In the following all parts and percentages are based on weight unless otherwise specified.

### Preparation of pressure sensitive adhesive dispersion polymer

The pressure sensitive adhesive dispersion polymers were prepared by a free radical emulsion polymerization process combining an initial reactor charge and two reactant feeds. A double-wall 6-liter glass reactor connected to a cryostat enabling temperature control and equipped with a blade stirrer was charged with 800 g of deionized water and 40 g of a polymethyl methacrylate seed dispersion with 20 % solid content and an average particle size of 30 nm.

A monomer pre-emulsion was prepared consisting of 2.76 kg reactants (according to Table 1 and Table 2), 22.8 g of anionic surfactant (C₁₃-C₁₅ alkyl aryl sulfonate) and 1.2 kg deionized water and treated with a dissolver disk over 5 min, obtaining a homogenous monomer emulsion. Furthermore, an initiator solution was prepared by dissolving 8 g of sodium persulfate in 72 g deionized water.

After the initial charge had been heated to 85 °C under agitation the monomer pre-emulsion and the initiator solution were continuously fed into the reactor over four hours. The reaction temperature was maintained constantly at 85 °C. The monomer inlet was finally flushed with 50 g of water. The batch was agitated further for another 30 min before cooling down to 60 °C. For the post-activation a 5 % solution of 2.5 g erythorbic acid was fed to the batch over one hour and a first shot of a 10 % solution of 1.1 g tert-butyl hydroperoxide was added with starting the erythorbic acid feed start and a second shot after 30 minutes.

The batch was then let cool down to ambient temperature (20-25 °C), neutralized with 10 % sodium hydroxide solution to pH 7.5, sieved through a 100 µm filter cloth and the total solid content adjusted to 52 %. The particle size of the sample dispersions was found to be between 210 and 230 nm, determined with a Mastersizer 2000 (commercially available from Malvern Panalytical Ltd. (Great Britain)).

The examples were characterized on their viscoelastic properties via Dynamic-mechanical analysis (DMA) on a dynamic mechanical analyzer MCR 302e, equipped with a Peltier temperature controlled lower plate (P-PTD 200, diameter 56 mm) and Peltier hood (H-PTD 200) (all commercially available from Anton Paar Group AG (Austria)) for a good temperature control. The specimen were prepared by diluting the dispersions to 40 % solid content and placing so much dispersion in a disc-shaped silicone mold with a diameter of 30 mm that after drying at ambient conditions (20 to 25 °C) for two days a film thickness of 0.6 to 0.8 mm was obtained. Film formation was completed by heating the dried sample in an oven at 80 °C for 5 hours and reconditioning for 24 h in standard climate conditions (temperature of 23 ±1 °C and a controlled relative humidity of 50 ± 5 %). A disc of 15 mm diameter was punched out of the sample film and placed between parallel plates with the upper plate having a diameter of 15 mm, carefully ensuring that complete contact is made between specimen and plates. A temperature sweep at a heating rate of 2 K/min starting from -40 up to 130 °C was recorded with constant angular frequency of 10 rad/s at a constant normal force of 1 N and a logarithmic deformation ramp from 0.02 to 2 %.

The maximum of the loss angle tangens Delta (tanDelta max) was evaluated as a measure for the dynamic glass transition temperature and the tanDelta value at 130 °C read. The tanDelta maximum and the tanDeta values at 130 °C of Examples 1 to 7 are displayed in Table 1 and of Examples 8 to 12 in Table 2.

**Table 1: Examples 1 to 7**

| **EXAMPLES** | 1 | **2** | **3** | **4** | **5** | **6** | **7** |
|---|---|---|---|---|---|---|---|
| **Component (a) [parts** per 100 monomers] | | | | | | | |
| n-butyl acrylate | 91 | 91 | 91 | 90 | - | 74 | 74 |
| 2-ethylhexyl acrylate | - | - | - | - | 93 | - | - |

| **Component (b)** [parts per 100 monomers] | | | | | | | |
|---|---|---|---|---|---|---|---|
| methyl methacrylate | 8 | 8 | 8 | 7 | - | - | - |
| styrene | - | - | - | - | 5 | - | - |
| n-butyl methacrylate | - | - | - | - | - | 25 | 25 |

| **Component (c)** [parts per 100 monomers] | | | | | | | |
|---|---|---|---|---|---|---|---|
| acrylic acid | 1 | 1 | 1 | 1 | - | 1 | 1 |
| methacrylic acid | - | - | - | - | 2 | - | - |
| 2-hydroxyethyl methacrylate | - | - | - | 2 | - | - | - |

| **Component (d)** [parts per 100 monomers] | | | | | | | |
|---|---|---|---|---|---|---|---|
| diallyl phthalate | - | - | - | - | - | - | 0.02 |

| **Component (e)** [parts per 100 monomers] | | | | | | | |
|---|---|---|---|---|---|---|---|
| n-dodecyl mercaptan | 0.03 | 0.1 | 0.14 | 0.08 | 0.12 | 0.09 | 0.15 |

| **DMA Results** | | | | | | | |
|---|---|---|---|---|---|---|---|
| tanDelta maximum [ °C] | -22 | -22 | -22 | -21 | -18 | -21 | -21 |
| tanDelta at 130 °C | 0.34 | 0.42 | 0.51 | 0.40 | 0.44 | 0.40 | 0.43 |

**Table 2: Comparative Examples 8 to 12**

| **EXAMPLES** | **8** | **9** | **10** | **11** | **12** |
|---|---|---|---|---|---|
| **Component (a)** [parts per 100 monomers] | | | | | |
| n-butyl acrylate | 91 | 91 | 90 | 95 | 83 |
| 2-ethylhexyl acrylate | - | - | - | - | - |

| **Component (b)** [parts per 100 monomers] | | | | | |
|---|---|---|---|---|---|
| methyl methacrylate | 8 | 8 | 7 | 4 | 16 |
| styrene | - | - | - | - | - |
| n-butyl methacrylate | - | - | - | - | - |

| **Component (c)** [parts per 100 monomers] | | | | | |
|---|---|---|---|---|---|
| acrylic acid | 1 | 1 | 1 | 1 | 1 |
| methacrylic acid | - | - | - | - | - |
| 2-hydroxyethyl methacrylate | - | - | 2 | - | - |

| **Component (d)** [parts per 100 monomers] | | | | | |
|---|---|---|---|---|---|
| diallyl phthalate | - | - | - | - | - |

| **Component (e)** [parts per 100 monomers] | | | | | |
|---|---|---|---|---|---|
| n-dodecyl mercaptan | - | 0.2 | - | 0.11 | 0.05 |

| **DMA Results** | | | | | |
|---|---|---|---|---|---|
| tanDelta maximum [ °C] | -22 | -22 | -21 | -28 | -13 |
| tanDelta at 130 °C | 0.31 | 0.63 | 0.30 | 0.41 | 0.39 |

The repulsion resistance was determined for the examples as follows. The dispersions of Examples 1 to 12 were drawn down on biaxially oriented PET film Mylar^{™} A (commercially available from DuPont Teijin Films (Luxembourg)) of 350 µm gauge with a film doctor blade in such a way that a coating weight of 40 g/m² resulted after drying in an oven for 10 minutes at 80 °C. The self-adhesive sheet was cut to pieces of 25 mm width and 100 mm length. The pieces were conditioned in a climate room with a temperature of 23 ±1 °C and a controlled relative humidity of 50 ± 5 % for 24 hours. A piece of pipe according to **DIN EN** 1401-1 made of rigid PVC with an outer diameter of 110 mm serving as a curved substrate was kept in the same environment for 24 hours. Prior to applying the samples, the outer surface of the pipe was carefully cleaned by wiping it with a cloth moistened with acetone.

The rectangular sample pieces were placed on the PVC pipe in such a way that the long side was oriented at a right angle to the axis of the pipe to achieve a maximum of bending. It was taken care of a complete contact of the adhesive with the pipe surface and air inclusions carefully avoided with the aid of a plastic squeegee. Directly after placing the sample pieces, they were firmly pressed on the pipe surface by using a rubber coated roller with a weight of 2 kg moved slowly forth and back three times. One of the two short ends of the sample pieces was additionally fixed with a duct tape (tesa^{™} Extrapower commercially available from Tesa SE (Germany)) overlapping the sample edge by 5 mm to allow detachment only from the opposite short end.

The piece of pipe was then placed in an oven heated at 40 °C and the behavior of the samples assessed after 72 hours on distance of detachment from the pipe in the unit millimeters (mm) and failure mode (free of adhesive residues or adhesive residues observed under detached area) indicating a rather strong or poor cohesive characteristic of the pressure sensitive adhesive sample.

The assessment was as follows in Table 3 and 4.

**Table 3:**

| **Ranking** | **Detached distance from sample end:** |
|---|---|
| 0 | < 2 mm |
| 1 | 2 - 10mm |
| 2 | 10 - 20 mm |
| 3 | > 20 mm |

**Table 4:**

| **Failure mode under detached area** | **Abbreviation** |
|---|---|
| No adhesive residues on the pipe | AF |
| Adhesive residues on the pipe | CF |

The repulsion resistance properties of Examples 1 to 7 are shown in Table 5 and of comparative examples 8 to 12 in Table 6.

**Table 5: Examples 1 to 7**

| **EXAMPLES** | **1** | **2** | **3** | **4** | **5** | **6** | **7** |
|---|---|---|---|---|---|---|---|
| Self-detachment | 1 | 0 | 1 | 0 | 0 | 0 | 0 |
| Failure mode | AF | n.a. | CF | n.a. | n.a. | n.a. | n.a. |

| | | | | | | | |
|---|---|---|---|---|---|---|---|
| n.a.: not applicable if no detachment occurs | | | | | | | |

**Table 6: Examples 8 to 12**

| **EXAMPLES** | **8** | **9** | **10** | **11** | **12** |
|---|---|---|---|---|---|
| Self-detachment | 3 | 2 | 3 | 2 | 3 |
| Failure mode | AF | CF | AF | CF | AF |

## Claims

1. A pressure sensitive adhesive dispersion polymer obtained by emulsion polymerization of a monomer mixture comprising:
(a) at least 60 wt.-% of one or more than one (meth)acrylic monomer(s) that individually yield(s) a homopolymer having a glass transition temperature (Tg) of -40 °C or less;
(b) at least 5 wt.-% of one or more than one ethylenically unsaturated monomer(s) that individually yield(s) a homopolymer having a Tg of 15 °C or higher;
(c) 0.1 to 5 wt.-% of one or more than one ethylenically unsaturated monomer(s) having an acid and/or a hydroxyl functional group;
(d) 0 to 0.5 wt.-% of one or more than one monomer(s) having at least two ethylenically unsaturated groups; and
(e) 0.01 to 0.50 wt.-% of a chain transfer agent;
wherein monomers (a) to (d) are different from each other and the weight percentages is based on the total amount of monomers in the monomer mixture;
wherein the pressure sensitive adhesive dispersion polymer has a tanDelta maximum within a temperature range between -25 °C and -15 °C and
a tanDelta value at 130 °C between 0.33 and 0.60, wherein the tanDelta is determined by Dynamic Mechanical Analysis (DMA) at an angular frequency of 10 rad/s using a parallel plate tool.

2. The pressure sensitive adhesive dispersion polymer of claim 1, wherein the pressure sensitive adhesive dispersion polymer has a tanDelta value at 130 °C between 0.34 to 0.55, preferably between 0.34 to 0.51, more preferably between 0.38 and 0.45.

3. The pressure sensitive adhesive dispersion polymer of any of the preceding claims, wherein
(a) the one or more than one (meth)acrylic monomer(s) individually yield(s) a homopolymer having a glass transition temperature (Tg) in the range of -65 °C to -40 °C; and/or
wherein
(a) the one or more than one (meth)acrylic monomer(s) is/are selected from 2-ethylhexyl acrylate, n-butyl acrylate, 3-methylbutyl acrylate, hexyl acrylate, heptyl acrylate, octyl acrylate, nonyl acrylate, propyl acrylate, propylheptyl acrylate, heptadecyl acrylate, decyl methacrylate, dodecyl methacrylate, isodecyl methacrylate, octyl methacrylate, lauryl methacrylate, 2-methoxyethyl acrylate, 3-methoxypropyl acrylate, 3-ethoxypropyl acrylate, 3-methoxybutyl acrylate, hydroxybutyl acrylate, hydroxyethylcaprolactone acrylate, and combinations thereof, preferably from 2-ethylhexyl acrylate, n-butyl acrylate, and combinations thereof, most preferably n-butyl acrylate; and/or
, wherein the monomer mixture comprises,
(a) at least 65 wt.-%, preferably at least 70 wt.-% of the one or more than one (meth)acrylic monomer(s) that individually yield(s) a homopolymer having a glass transition temperature (Tg) of -40 °C or less; and/or
(b) at least 5 wt.-%, preferably at least 7 wt.-% of the one or more than one ethylenically unsaturated monomer(s) that individually yield(s) a homopolymer having a Tg of 15 °C or higher;
wherein the weight percentage is based on the total amount of monomers in the monomer mixture.

4. The pressure sensitive adhesive dispersion polymer of any of the preceding claims, wherein
(b) the one or more than one ethylenically unsaturated monomer(s) individually yield(s) a homopolymer having a glass transition temperature (Tg) in the range of 15 °C to 150 °C, preferably in the range of 18 °C to 120 °C; and/or
wherein
(b) the one or more than one ethylenically unsaturated monomer(s) is/are selected from acrylonitrile, 3,3,5-trimethylcyclohexyl acrylate, cyclohexyl acrylate, isobornyl acrylate, octadecyl acrylate, tert-butyl acrylate, 2-phenylethyl methacrylate, benzyl methacrylate, n-butyl methacrylate, cyclohexyl methacrylate, ethyl methacrylate, glycidyl methacrylate, hexadecyl methacrylate, isobornyl methacrylate, isobutyl methacrylate, isopropyl methacrylate, methyl methacrylate, neopentyl methacrylate, octadecyl methacrylate, propyl methacrylate, tert-butyl methacrylate, styrene, methoxy styrene, 2-methyl styrene, 3-methyl styrene, 4-ethyl styrene, 4-isopropyl styrene, 4-methoxy-2-methyl styrene, 4-methoxy styrene, 4-methyl styrene, 2-chloro styrene, 4-bromo styrene, 4-chloro styrene, 4-fluoro styrene, and combinations thereof, preferably from methyl methacrylate, n-butyl methacrylate, styrene and combinations thereof , most preferably methyl methacrylate.

5. The pressure sensitive adhesive dispersion polymer of any of the preceding claims, wherein
(c) the one or more than one ethylenically unsaturated monomer(s) having an acid functional group is/are selected from ethylenically unsaturated carboxylic acid monomers, ethylenically unsaturated sulfonic acid monomers, ethylenically unsaturated phosphorous-containing acid monomers, preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinyl benzene sulfonate, 2-methyl-2-propene-1-sulfonic acid, 4-styrenesulfonic acid, 2-acrylamido-2-methyl-1-propanesulfonic acid, vinyl phosphonic acid, dimethyl vinyl phosphonate, diethyl vinyl phosphonate, diethyl allyl phosphonate, allyl phosphonic acid, and combinations thereof, more preferably from (meth)acrylic acid; the one or more than one ethylenically unsaturated monomer(s) having an hydroxyl functional group is/are selected from allyl alcohol, vinyl alcohol, N-methylolacrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, preferably hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, more preferably hydroxyethyl (meth)acrylate, hydroxypropyl (meth)acrylate, hydroxybutyl methacrylate, and combinations thereof; and
the one or more than one ethylenically unsaturated monomer(s) having an acid and hydroxy functional group is/are selected from 3-allyloxy-2-hydroxy-1-propane sulfonic acid; and/or
wherein the monomer mixture comprises,
(c) 0.2 to 4 wt.-%, preferably 0.5 to 3 wt.-% of the one or more than one ethylenically unsaturated monomer(s) having an acid and/or a hydroxyl functional group;
wherein the weight percentage is based on the total amount of monomers in the monomer mixture.

6. The pressure sensitive adhesive dispersion polymer of any of the preceding claims, wherein
(d) the one or more than one monomer(s) having at least two ethylenically unsaturated groups is/are selected from diallyl phthalate, allyl (meth)acrylate, vinyl (meth)acrylate, divinyl benzene, 1,2-ethyleneglycol di(meth)acrylate, 1,4-butanediol di(meth)acrylate, 1,6-hexanediol di(meth)acrylate, and combinations thereof; and/or wherein the monomer mixture comprises,
(d) 0 to 0.4 wt.-%, preferably 0 to 0.2 wt.-% of the one or more than one monomer(s) having at least two ethylenically unsaturated groups;
wherein the weight percentage is based on the total amount of monomers in the monomer mixture; and/or
(e) the chain transfer agent is selected from n-dodecyl mercaptan, carbon tetrachloride, carbon tetrabromide, bromotrichloro methane, 4-methylbenzenethiol, isooctyl 3-mercaptopropionate, tert-nonyl mercaptan, 4,4'-thiobisbenzenethiol, tert-dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably n-dodecyl mercaptan; and/or
wherein the monomer mixture comprises,
(e) 0.01 to 0.40 wt.-%, preferably 0.01 to 0.25 wt.-% of the chain transfer agent;
wherein the weight percentage is based on the total amount of monomers in the monomer mixture.

7. A method for preparing a pressure sensitive adhesive dispersion polymer comprising:
polymerizing by emulsion polymerization of a monomer mixture to obtain a dispersion polymer, wherein the monomer mixture comprises:
(a) at least 60 wt.-% of one or more than one (meth)acrylic monomer(s) that individually yield(s) a homopolymer having a glass transition temperature (Tg) of -40 °C or less;
(b) at least 5 wt.-% of one or more than one ethylenically unsaturated monomer(s) that individually yield(s) a homopolymer having a Tg of 15 °C or higher;
(c) 0.1 to 5 wt.-% of one or more than one ethylenically unsaturated monomer(s) having an acid and/or a hydroxyl functional group;
(d) 0 to 0.5 wt.-% of one or more than one monomer(s) having at least two ethylenically unsaturated groups; and
(e) 0.01 to 0.50 wt.-% of a chain transfer agent;
wherein monomers (a) to (d) are different from each other and the weight percentages is based on the total amount of monomers in the monomer mixture; and wherein
the dispersion polymer has a tanDelta maximum within a temperature range between -25 °C and -15 °C and
a tanDelta value at 130 °C between 0.33 and 0.60, the tanDelta being determined by Dynamic Mechanical Analysis (DMA) at an angular frequency of 10 rad/s using a parallel plate tool.

8. The method of claim 7, wherein the dispersion polymer has a tanDelta value at 130 °C between 0.34 to 0.55, preferably between 0.34 to 0.51, more preferably between 0.38 and 0.45.

9. The method of claim 7 or 8, wherein
(a) is defined as in claim 3; and/or
(b) is defined as in claims 3 or 4; and/or
(c) is defined as in claim 5; and/or
(d) is defined as in claim 6; and/or
(e) is defined as in claim 6.

10. Use of the pressure sensitive adhesive dispersion polymer according to any one of claims 1 to 6 or obtained by the method according to any one of claims 7 to 9 for the production of a pressure sensitive adhesive.

11. A pressure sensitive adhesive composition comprising the pressure sensitive adhesive dispersion polymer according to any one pf claims 1 to 6 or obtained by the method according to any one of claims 7 to 9, preferably being free of any tackifier resins.

12. Use of the pressure sensitive adhesive composition according to claim 11 for the production of a pressure sensitive adhesive sheet.

13. A pressure sensitive adhesive sheet comprising:
a support substrate coated on one surface with the pressure sensitive adhesive composition according to claim 11;
wherein the support substrate preferably is a textile or a polymeric film, a foamed polymeric film or a paper, wherein the textile more preferably is a non-woven or woven material; and/or
wherein the polymeric film preferably more is polyolefin film, polyester film, or polyvinyl chloride film.

14. Use of the pressure sensitive adhesive sheet according to claim 13 for labeling articles, wherein the articles preferably comprise bottles and packaging, such as food packaging; and/or for stationery tape and/or double-sided tape.

15. Use of a dispersion polymer having a tanDelta maximum within a temperature range between -25 °C and -15 °C, and a tanDelta value at 130 °C between 0.33 and 0.60, the tanDelta being determined with a Dynamic Mechanical Analysis (DMA) at an angular frequency of 10 rad/s using a parallel plate tool, for the production of a pressure sensitive adhesive.

## Patentansprüche

1. Ein druckempfindliches Klebstoff-Dispersionspolymer erhalten durch Emulsionspolymerisation von einer Monomermischung umfassend:
(a) wenigstens 60 Gew.-% von einem oder mehr als einem (Meth)acrylmonomer(en), welche(s) einzeln ein Homopolymer aufweisend eine Glasübergangstemperatur (Tg) von -40 °C oder weniger ergibt/ergeben;
(b) wenigstens 5 Gew.-% von einem oder mehr als einem ethylenisch ungesättigten Monomer(en), welche(s) einzeln ein Homopolymer aufweisend eine Tg von 15 °C oder mehr ergibt/ergeben;
(c) 0,1 bis 5 Gew.-% von einem oder mehr als einem ethylenisch ungesättigten Monomer(en) aufweisend eine säure- und/oder eine hydroxylfunktionelle Gruppe;
(d) 0 bis 0,5 Gew.-% von einem oder mehr als einem Monomer(en) aufweisend wenigstens zwei ethylenisch ungesättigte Gruppen; und
(e) 0,01 bis 0,5 Gew.-% eines Kettenübertragungsmittels,
wobei sich die Monomere (a) bis (d) voneinander unterscheiden und die Gew.-% auf dem Gesamtgewicht an Monomeren in der Monomermischung basieren,
wobei das druckempfindliche Klebstoff-Dispersionspolymer ein tanDelta Maximum in einem Temperaturbereich zwischen -25 °C und -15 °C und einen tanDelta-Wert bei 130 °C zwischen 0,33 und 0,60 aufweist, wobei der tanDelta mittels dynamisch mechanischer Analyse (DMA) bei einer Winkelfrequenz von 10 rad/s unter Verwendung einer Parallelplattenvorrichtung bestimmt wird.

2. Das druckempfindliche Klebstoff-Dispersionspolymer des Anspruchs 1, wobei das druckempfindliche Klebstoff-Dispersionspolymer einen tanDelta-Wert bei 130 °C zwischen 0,34 bis zu 0,55 aufweist, vorzugsweise zwischen 0,34 bis zu 0,51, noch bevorzugter zwischen 0,38 und 0,45.

3. Das druckempfindliche Klebstoff-Dispersionspolymer nach irgendeinem der vorhergehenden Ansprüche, wobei
(a) das eine oder die mehr als ein (Meth)acrylmonomer(e) einzeln ein Homopolymer aufweisend eine Glasübergangstemperatur (Tg) im Bereich von -65 °C bis -40 °C ergibt/ergeben, und/oder wobei
(a) das eine oder die mehr als ein (Meth)acrylmonomer(e) aus 2-Ethylhexylacrylat, n-Butylacrylat, 3-Methylbutylacrylat, Hexylacrylat, Heptylacrylat, Octylacrylat, Nonylacrylat, Propylacrylat, Propylheptylacrylat, Heptadecylacrylat, Decylmethacrylat, Dodecylmethacrylat, Isodecylmethacrylat, Octylmethacrylat, Laurylmethacrylat, 2-Methoxyethylacrylat, 3-Methoxypropylacrylat, 3-Ethoxypropylacrylat, 3-Methoxybutylacrylat, Hydroxybutylacrylat, Hydroxyethylcaprolactonacrylat und Kombinationen derselben ausgewählt ist/sind, vorzugweise aus 2-Ethylhexylacrylat, n-Butylacrylat und Kombinationen derselben, am bevorzugtesten n-Butylacrylat, und/oder
wobei die Monomermischung umfasst:
(a) wenigstens 65 Gew.-%, vorzugsweise wenigstens 70 Gew.-% des einen oder mehr als einem (Meth)acrylmonomer(en), welche(s) einzeln ein Homopolymer aufweisend eine Glasübergangstemperatur (Tg) von -40 °C oder weniger ergibt/ergeben, und/oder
(b) wenigstens 5 Gew.-%, vorzugsweise wenigstens 7 Gew.-% des einen oder mehr als einem ethylenisch ungesättigten Monomer(en), welche(s) einzeln ein Homopolymer aufweisend eine Tg von 15 °C oder mehr ergibt/ergeben;
wobei die Gew.-% auf der Gesamtmenge an Monomeren in der Monomermischung basieren.

4. Das druckempfindliche Klebstoff-Dispersionspolymer gemäß irgendeinem der vorhergehenden Ansprüche, wobei
(b) das eine oder die mehr als ein ethylenisch ungesättigte(n) Monomer(e) einzeln ein Homopolymer aufweisend eine Glasübergangstemperatur (Tg) im Bereich von 15 °C bis 150 °C, vorzugsweise im Bereich von 18 °C bis 120 °C ergibt/ergeben; und/oder wobei
(b) das eine oder die mehr als ein ethylenisch ungesättigte(n) Monomer(e) aus Acrylnitril, 3,3,5-Trimethylcyclohexylacrylat, Cyclohexylacrylat, Isobornylacrylat, Octadecylacrylat, tert.-Butylacrylat, 2-Phenylethylmethacrylat, Benzylmethacrylat, n-Butylmethacrylat, Cyclohexylmethacrylat, Ethylmethacrylat, Glycidylmethacrylat, Hexadecylmethacrylat, Isobornylmethacrylat, Isobutylmethacrylat, Isopropylmethacrylat, Methylmethacrylat, Neopentylmethacrylat, Octadecylmethacrylat, Propylmethacrylat, tert.-Butylmethacrylat, Styrol, Methoxystyrol, 2-Methylstyrol, 3-Methylstyrol, 4-Ethylstyrol, 4-Isopropylstyrol, 4-Methoxy-2-methylstyrol, 4-Methoxystyrol, 4-Methylstyrol, 2-Chlorstyrol, 4-Bromstyrol, 4-Chlorstyrol, 4-Fluorstyrol und Kombinationen derselben ausgewählt ist/sind; vorzugsweise aus Methylmethacrylat, n-Butylmethacrylat, Styrol und Kombinationen derselben, am meisten bevorzugt Methylmethacrylat.

5. Das druckempfindliche Klebstoff-Dispersionspolymer gemäß irgendeinem der vorhergehenden Ansprüche, wobei
(c) das eine oder die mehr als ein ethylenisch ungesättigte(n) Monomer(e) aufweisend eine säurefunktionelle Gruppe ausgewählt ist/sind aus ethylenisch ungesättigten Carbonsäuremonomeren, ethylenisch ungesättigten Sulfonsäuremonomeren, ethylenisch ungesättigten phosphorhaltigen Säuremonomeren, vorzugsweise aus (Meth)acrylsäure, Crotonsäure, Fumarsäure, Itaconsäure, Maleinsäure, Maleinsäureanhydrid, Vinylessigsäure, Vinylmilchsäure, Vinylsulfonsäure, Styrolsulfonsäure, 2-Carboxyethyl(meth)acrylat, Vinylsulfonsäure, Phenylvinylsulfonat, Natrium-4-vinylbenzolsulfonat, 2-Methyl-2-propen-1-sulfonsäure, 4-Styrolsulfonsäure, 2-Acrylamid-2-methyl-1-propansulfonsäure, Vinylphosphonsäure, Dimethylvinylphosphonat, Diethylvinylphosphonat, Diethylallylphosphonat, Allylphosphonsäure und Kombinationen derselben, bevorzugter aus (Meth)acrylsäure;
das eine oder die mehr als ein ethylenisch ungesättigte(n) Monomer(e) aufweisend eine hydroxylfunktionelle Gruppe ausgewählt ist/sind aus Allylalkohol, Vinylalkohol, N-Methylolacrylamid, 1-Penten-3-ol, Hydroxyalkylestern von ethylenisch ungesättigten Säuren, wie etwa Hydroxyethyl(meth)acrylat, Hydroxypropyl(meth)-acrylat, Hydroxybutyl(meth)acrylat und Hydroxyethylcaprolactonacrylat und Kombinationen derselben, vorzugsweise Hydroxyalkylestern von ethylenisch ungesättigten Säuren, wie etwa Hydroxyethyl(meth)acrylat, Hydroxypropyl(meth)acrylat, Hydroxybutyl(meth)-acrylat und Hydroxyethylcaprolactonacrylat, bevorzugter Hydroxyethyl(meth)acrylat, Hydroxypropyl(meth)acrylat, Hydroxybutyl(meth)-acrylat und Kombinationen derselben, und
das eine oder die mehr als ein ethylenisch ungesättigte(n) Monomer(e) aufweisend eine säure- und hydroxyfunktionelle Gruppe aus 3-Allyloxy-2-hydroxy-1-propansulfonsäure ausgewählt ist/sind, und/oder
wobei die Monomermischung
(c) 0,2 bis 4 Gew.-%, vorzugsweise 0,5 bis 3 Gew.-% des einen oder mehr als einem ethylenisch ungesättigten Monomer(en) aufweisend eine säure- und/oder eine hydroxylfunktionelle Gruppe umfasst;
wobei die Gew.-% auf der Gesamtmenge an Monomeren in der Monomermischung basieren.

6. Das druckempfindliche Klebstoff-Dispersionspolymer gemäß irgendeinem der vorhergehenden Ansprüche, wobei
(d) das eine oder die mehr als ein Monomer(e) aufweisend wenigstens zwei ethylenisch ungesättige Gruppen aus Diallylphthalat, Allyl(meth)acrylat, Vinyl(meth)acrylat, Divinylbenzol, 1,2-Ethylen-glykoldi(meth)acrylat, 1,4-Butandioldi(meth)acrylat, 1,6-Hexandiol-di(meth)acrylat und Kombinationen derselben ausgewählt ist/sind; und/oder
wobei die Monomermischung
(d) 0 bis 0,4 Gew.-%, vorzugsweise 0 bis 0,2 Gew.-% des einen oder mehr als einem Monomer(en) aufweisend wenigstens zwei ethylenisch ungesättigte Gruppen umfasst,
wobei die Gew.-% auf der Gesamtmenge an Monomeren in der Monomermischung basieren, und/oder
(e) das Kettenübertragungsmittel aus n-Dodecylmercaptan, Kohlenstofftetrachlorid, Kohlenstofftetrabromid, Bromtrichlormethan, 4-Methylbenzolthiol, Isooctyl-3-mercaptopropionat, tert.-Nonyl-mercaptan, 4,4'-Thiobisbenzolthiol, tert.-Dodecylmercaptan, alpha-Methylstyroldimer, Thioglykolsäure, 2-Ethylhexylthioglykolat, Butyl-3-mercaptopropionat, 1,8-Dimercapto-3,6-dioxaoctan und Kombinationen derselben ausgewählt ist, vorzugsweise n-Dodecylmercaptan; und/oder
wobei die Monomermischung
(e) 0,01 bis 0,40 Gew.-%, vorzugsweise 0,01 bis 0,25 Gew.-% des Kettenübertragungsmittels umfasst;
wobei die Gew.-% auf der Gesamtmenge an Monomeren in der Monomermischung basieren.

7. Ein Verfahren zum Herstellen eines druckempfindlichen Klebstoff-Dispersionspolymers umfassend:
Polymerisieren mittels Emulsionspolymerisation von einer Monomermischung, um ein Dispersionspolymer zu erhalten, wobei die Monomermischung umfasst:
(a) wenigstens 60 Gew.-% von einem oder mehr als einem (Meth)acrylmonomer(en), welche(s) einzeln ein Homopolymer aufweisend eine Glasübergangstemperatur (Tg) von -40 °C oder weniger ergibt/ergeben,
(b) wenigstens 5 Gew.-% von einem oder mehr als einem ethylenisch ungesättigten Monomer(en), welche(s) einzeln ein Homopolymer aufweisend eine Tg von 15 °C oder mehr ergibt/ergeben,
(c) 0,1 bis 5 Gew.-% von einem oder mehr als einem ethylenisch ungesättigten Monomer(en) aufweisend eine säure- und/oder eine hydroxylfunktionelle Gruppe;
(d) 0 bis 0,5 Gew.-% von einem oder mehr als einem Monomer(en) aufweisend wenigstens zwei ethylenisch ungesättigte Gruppen, und
(e) 0,01 bis 0,50 Gew.-% eines Kettenübertragungsmittels;
wobei sich die Monomere (a) bis (d) voneinander unterscheiden und die Gew.-% auf der Gesamtmenge an Monomeren in der Monomermischung basieren, und wobei
das Dispersionspolymer ein tanDelta-Maximum in einem Temperaturbereich zwischen -25 °C und -15 °C und einen tanDelta-Wert bei 130 °C zwischen 0,33 und 0,60 aufweist, wobei der tanDelta mittels dynamischer mechanischer Analyse (DMA) bei einer Winkelfrequenz von 10 rad/s unter Verwendung einer Parallelplattenvorrichtung bestimmt wird.

8. Das Verfahren des Anspruchs 7, wobei das Dispersionspolymer einen tanDelta-Wert bei 130 °C zwischen 0,34 bis zu 0,55, vorzugsweise zwischen 0,34 bis zu 0,51, bevorzugter zwischen 0,38 und 0,45 aufweist.

9. Das Verfahren des Anspruchs 7 oder 8, wobei
(a) wie in Anspruch 3 definiert ist; und/oder
(b) wie in Anspruch 3 oder 4 definiert ist; und/oder
(c) wie in Anspruch 5 definiert ist; und/oder
(d) wie in Anspruch 6 definiert ist; und/oder
(e) wie in Anspruch 6 definiert ist.

10. Verwendung des druckempfindlichen Klebstoff-Dispersionspolymers gemäß irgendeinem der Ansprüche 1 bis 6 oder erhalten durch das Verfahren gemäß irgendeinem der Ansprüche 7 bis 9 zur Herstellung eines druckempfindlichen Klebstoffs.

11. Eine druckempfindliche Klebstoffzusammensetzung umfassend das druckempfindliche Klebstoff-Dispersionspolymer gemäß irgendeinem der Ansprüche 1 bis 6 oder erhalten durch das Verfahren gemäß irgendeinem der Ansprüche 7 bis 9, vorzugsweise frei von irgendwelchen Haftvermittlerharzen.

12. Verwendung der druckempfindlichen Klebstoffzusammensetzung gemäß Anspruch 11 zur Herstellung einer druckempfindlichen Klebstofflage.

13. Eine druckempfindliche Klebstofflage umfassend:
ein Trägersubstrat beschichtet auf einer Oberfläche mit der druckempfindlichen Klebstoffzusammensetzung gemäß Anspruch 11;
wobei das Trägersubstrat vorzugsweise ein Textil oder ein polymerer Film, ein geschäumter polymerer Film oder ein Papier ist, wobei das Textil bevorzugter ein nicht gewebtes oder gewebtes Material ist; und/oder wobei der polymere Film vorzugsweise ein Polyolefinfilm, Polyesterfilm oder Polyvinylchloridfilm ist.

14. Verwendung der druckempfindlichen Klebstofflage gemäß Anspruch 13 zum Kennzeichnen von Gegenständen, wobei die Gegenstände vorzugsweise Flaschen und Verpackungen, wie etwa Lebensmittelverpackungen umfassen, und/oder für Klebeband und/oder doppelseitiges Klebeband.

15. Verwendung eines Dispersionspolymers aufweisend ein tanDelta-Maximum in einem Temperaturbereich zwischen -25 °C und -15 °C und einen tanDelta-Wert bei 130 °C zwischen 0,33 und 0,60, wobei der tanDelta mittels dynamischer mechanischer Analyse (DMA) bei einer Winkelfrequenz von 10 rad/s unter Verwendung einer Parallelplattenvorrichtung bestimmt wird, zur Herstellung von einem druckempfindlichen Klebstoff.

## Revendications

1. Polymère en dispersion adhésif autocollant, obtenu par polymérisation en émulsion d'un mélange de monomères comprenant :
(a) au moins 60 % en poids d'un ou de plusieurs monomère(s) (méth)acrylique(s) qui forme(nt) individuellement un homopolymère ayant une température de transition vitreuse (Tg) de -40 °C ou moins ;
(b) au moins 5 % en poids d'un ou de plusieurs monomère(s) à insaturation éthylénique qui forme(nt) individuellement un homopolymère ayant une Tg de 15 °C ou plus ;
(c) 0,1 à 5 % en poids d'un ou de plusieurs monomère(s) à insaturation éthylénique comportant un groupe fonctionnel acide et/ou un groupe fonctionnel hydroxy ;
(d) 0 à 0,5 % en poids d'un ou de plusieurs monomère(s) comportant au moins deux groupes à insaturation éthylénique ; et
(e) 0,01 à 0,50 % en poids d'un agent de transfert de chaîne ;
dans lequel les monomères (a) à (d) sont différents les uns des autres et les pourcentages en poids sont par rapport à la quantité totale de monomères dans le mélange de monomères ;
dans lequel le polymère en dispersion adhésif autocollant présente un maximum de tanDelta dans une plage de température comprise entre -25 °C et -15 °C et
une valeur de tanDelta à 130 °C comprise entre 0,33 et 0,60, la valeur de tanDelta étant déterminée par analyse mécanique dynamique (DMA) à une fréquence angulaire de 10 rad/s à l'aide d'un dispositif à plaques parallèles.

2. Polymère en dispersion adhésif autocollant selon la revendication 1, dans lequel le polymère en dispersion adhésif autocollant présente une valeur de tanDelta à 130 °C comprise entre 0,34 et 0,55, de préférence entre 0,34 et 0,51, plus préférablement entre 0,38 et 0,45.

3. Polymère en dispersion adhésif autocollant selon l'une quelconque des revendications précédentes, dans lequel
(a) lesdits un ou plusieurs monomère(s) (méth)acrylique(s) forme(nt) individuellement un homopolymère ayant une température de transition vitreuse (Tg) se situant dans la plage de -65 °C à -40 °C ; et/ou
dans lequel
(a) lesdits un ou plusieurs monomère(s) (méth)acrylique(s) est/sont choisi(s) parmi l'acrylate de 2-éthylhexyle, l'acrylate de n-butyle, l'acrylate de 3-méthylbutyle, l'acrylate d'hexyle, l'acrylate d'heptyle, l'acrylate d'octyle, l'acrylate de nonyle, l'acrylate de propyle, l'acrylate de propylheptyle, l'acrylate d'heptadécyle, le méthacrylate de décyle, le méthacrylate de dodécyle, le méthacrylate d'isodécyle, le méthacrylate d'octyle, le méthacrylate de lauryle, l'acrylate de 2-méthoxyéthyle, l'acrylate de 3-méthoxypropyle, l'acrylate de 3-éthoxypropyle, l'acrylate de 3-méthoxybutyle, l'acrylate d'hydroxybutyle, l'acrylate d'hydroxy-éthylcaprolactone, et des associations de ceux-ci, de préférence parmi l'acrylate de 2-éthylhexyle, l'acrylate de n-butyle et des associations de ceux-ci, plus préférablement consiste(nt) en l'acrylate de n-butyle ; et/ou
dans lequel le mélange de monomères comprend :
(a) au moins 65 % en poids, de préférence au moins 70 % en poids, desdits un ou plusieurs monomère(s) (méth)acrylique(s) qui forme(nt) individuellement un homopolymère présentant une température de transition vitreuse (Tg) de -40 °C ou moins ; et/ou
(b) au moins 5 % en poids, de préférence au moins 7 % en poids, desdits un ou plusieurs monomère(s) à insaturation éthylénique qui forme(nt) individuellement un homopolymère ayant une Tg de 15 °C ou plus ;
le pourcentage en poids étant par rapport à la quantité totale de monomères dans le mélange de monomères.

4. Polymère en dispersion adhésif autocollant selon l'une quelconque des revendications précédentes, dans lequel
(b) lesdits un ou plusieurs monomère(s) à insaturation éthylénique forme(nt) individuellement un homopolymère ayant une température de transition vitreuse (Tg) se situant dans la plage de 15 °C à 150 °C, de préférence dans la plage de 18 °C à 120 °C ; et/ou
dans lequel
(b) lesdits un ou plusieurs monomère(s) à insaturation éthylénique est/sont choisi(s) parmi l'acrylonitrile, l'acrylate de 3,3,5-triméthylcyclohexyle, l'acrylate de cyclohexyle, l'acrylate d'isobornyle, l'acrylate d'octadécyle, l'acrylate de tert-butyle, le méthacrylate de 2-phényléthyle, le méthacrylate de benzyle, le méthacrylate de n-butyle, le méthacrylate de cyclohexyle, le méthacrylate d'éthyle, le méthacrylate de glycidyle, le méthacrylate d'hexadécyle, le méthacrylate d'isobornyle, le méthacrylate d'isobutyle, le méthacrylate d'isopropyle, le méthacrylate de méthyle, le méthacrylate de néopentyle, le méthacrylate d'octadécyle, le méthacrylate de propyle, le méthacrylate de tert-butyle, le styrène, le méthoxystyrène, le 2-méthylstyrène, le 3-méthylstyrène, le 4-éthylstyrène, le 4-isopropylstyrène, le 4-méthoxy-2-méthylstyrène, le 4-méthoxystyrène, le 4-méthylstyrène, le 2-chlorostyrène, le 4-bromostyrène, le 4-chlorostyrène, le 4-fluorostyrène et des associations de ceux-ci, de préférence parmi le méthacrylate de méthyle, le méthacrylate de n-butyle, le styrène et des associations de ceux-ci, de façon tout particulièrement préférée consiste(nt) en le méthacrylate de méthyle.

5. Polymère en dispersion adhésif autocollant selon l'une quelconque des revendications précédentes, dans lequel
(c) lesdits un ou plusieurs monomère(s) à insaturation éthylénique comportant un groupe fonctionnel acide est/sont choisi(s) parmi les monomères acides carboxyliques à insaturation éthylénique, les monomères acides sulfoniques à insaturation éthylénique, les monomères acides phosphorés à insaturation éthylénique, de préférence parmi l'acide (méth)acrylique, l'acide crotonique, l'acide fumarique, l'acide itaconique, l'acide maléique, l'anhydride maléique, l'acide vinylacétique, l'acide vinyllactique, l'acide vinylsulfonique, l'acide styrènesulfonique, le (méth)acrylate de 2-carboxyéthyle, l'acide vinylsulfonique, le sulfonate de phénylvinyle, le 4-vinylbenzènesulfonate de sodium, l'acide 2-méthyl-2-propène-1-sulfonique, l'acide 4-styrènesulfonique, l'acide 2-acrylamido-2-méthyl-1-propanesulfonique, l'acide vinylphosphonique, le phosphonate de diméthylvinyle, le phosphonate de diéthylvinyle, le phosphonate de diéthylallyle, l'acide allylphosphonique, et des associations de ceux-ci, plus préférablement consiste(nt) en l'acide (méth)acrylique ;
lesdits un ou plusieurs monomère(s) à insaturation éthylénique comportant un groupe fonctionnel hydroxy est/sont choisi(s) parmi l'alcool allylique, l'alcool vinylique, le N-méthylolacrylamide, le 1-pentén-3-ol, les esters hydroxyalkyliques d'acides à insaturation éthylénique, tels que le (méth)acrylate d'hydroxyéthyle, le (méth)acrylate d'hydroxypropyle, le (méth)acrylate d'hydroxybutyle et l'acrylate d'hydroxyéthylcaprolactone, et des associations de ceux-ci, de préférence les esters hydroxyalkyliques d'acides à insaturation éthylénique, tels que le (méth)acrylate d'hydroxyéthyle, le (méth)acrylate d'hydroxypropyle, le (méth)acrylate d'hydroxybutyle et l'acrylate d'hydroxyéthylcaprolactone, plus préférablement le (méth)acrylate d'hydroxyéthyle, le (méth)acrylate d'hydroxypropyle, le méthacrylate d'hydroxybutyle et des associations de ceux-ci ; et
lesdits un ou plusieurs monomère(s) à insaturation éthylénique comportant un groupe fonctionnel acide et un groupe fonctionnel hydroxy consiste(nt) en l'acide 3-allyloxy-2-hydroxy-1-propanesulfonique ; et/ou dans lequel le mélange de monomères comprend
(c) 0,2 à 4 % en poids, de préférence 0,5 à 3 % en poids, desdits un ou plusieurs monomère(s) à insaturation éthylénique comportant un groupe fonctionnel acide et/ou un groupe fonctionnel hydroxy ;
le pourcentage en poids étant par rapport à la quantité totale de monomères dans le mélange de monomères.

6. Polymère en dispersion adhésif autocollant selon l'une quelconque des revendications précédentes, dans lequel
(d) lesdits un ou plusieurs monomère(s) comportant au moins deux groupes à insaturation éthylénique est/sont choisi(s) parmi le phtalate de diallyle, le (méth)acrylate d'allyle, le (méth)acrylate de vinyle, le divinylbenzène, le di(méth)acrylate de 1,2-éthylèneglycol, le di(méth)acrylate de 1,4-butanediol, le di(méth)acrylate de 1,6-hexanediol, et des associations de ceux-ci ; et/ou dans lequel le mélange de monomères comprend
(d) 0 à 0,4 % en poids, de préférence 0 à 0,2 % en poids, desdits un ou plusieurs monomère(s) comportant au moins deux groupes à insaturation éthylénique ; le pourcentage en poids étant par rapport à la quantité totale de monomères
dans le mélange de monomères ; et/ou
(e) l'agent de transfert de chaîne est choisi parmi le n-dodécylmercaptan, le tétrachlorure de carbone, le tétrabromure de carbone, le bromotrichlorométhane, le 4-méthylbenzènethiol, le 3-mercaptopropionate d'isooctyle, le tert-nonyl-mercaptan, le 4,4'-thiobisbenzènethiol, le tert-dodécylmercaptan, le dimère d'alpha-méthylstyrène, l'acide thioglycolique, le thioglycolate de 2-éthylhexyle, le 3-mercaptopropionate de butyle, le 1,8-dimercapto-3,6-dioxaoctane et des associations de ceux-ci, de préférence consiste en le n-dodécylmercaptan ; et/ou
dans lequel le mélange de monomères comprend :
(e) 0,01 à 0,40 % en poids, de préférence 0,01 à 0,25 % en poids, de l'agent de transfert de chaîne ;
le pourcentage en poids étant par rapport à la quantité totale de monomères dans le mélange de monomères.

7. Procédé de préparation d'un polymère en dispersion adhésif autocollant, comprenant :
la polymérisation par polymérisation en émulsion d'un mélange de monomères pour obtenir un polymère en dispersion, le mélange de monomères comprenant :
(a) au moins 60 % en poids d'un ou de plusieurs monomère(s) (méth)acrylique(s) qui forme(nt) individuellement un homopolymère ayant une température de transition vitreuse (Tg) de -40 °C ou moins ;
(b) au moins 5 % en poids d'un ou de plusieurs monomère(s) à insaturation éthylénique qui forme(nt) individuellement un homopolymère ayant une Tg de 15 °C ou plus ;
(c) 0,1 à 5 % en poids d'un ou de plusieurs monomère(s) à insaturation éthylénique comportant un groupe fonctionnel acide et/ou un groupe fonctionnel hydroxy ;
(d) 0 à 0,5 % en poids d'un ou de plusieurs monomère(s) comportant au moins deux groupes à insaturation éthylénique ; et
(e) 0,01 à 0,50 % en poids d'un agent de transfert de chaîne ;
dans lequel les monomères (a) à (d) sont différents les uns des autres et les pourcentages en poids sont par rapport à la quantité totale de monomères dans le mélange de monomères ; et dans lequel
le polymère en dispersion présente un maximum de tanDelta dans une plage de température comprise entre -25 °C et -15 °C et
une valeur de tanDelta à 130 °C comprise entre 0,33 et 0,60, la valeur de tanDelta étant déterminée par analyse mécanique dynamique (DMA) à une fréquence angulaire de 10 rad/s à l'aide d'un dispositif à plaques parallèles.

8. Procédé selon la revendication 7, dans lequel le polymère en dispersion présente une valeur de tanDelta à 130 °C comprise entre 0,34 et 0,55, de préférence entre 0,34 et 0,51, plus préférablement entre 0,38 et 0,45.

9. Procédé selon la revendication 7 ou 8, dans lequel
(a) est défini comme dans la revendication 3 ; et/ou
(b) est défini comme dans la revendication 3 ou 4 ; et/ou
(c) est défini comme dans la revendication 5 ; et/ou
(d) est défini comme dans la revendication 6 ; et/ou
(e) est défini comme dans la revendication 6.

10. Utilisation du polymère en dispersion adhésif autocollant selon l'une quelconque des revendications 1 à 6 ou obtenu par le procédé selon l'une quelconque des revendications 7 à 9 pour la production d'un adhésif autocollant.

11. Composition adhésive autocollante comprenant le polymère en dispersion adhésif autocollant selon l'une quelconque des revendications 1 à 6 ou obtenu par le procédé selon l'une quelconque des revendications 7 à 9, qui est de préférence exempte de toutes résines tackifiantes.

12. Utilisation de la composition adhésive autocollante selon la revendication 11 pour la fabrication d'une feuille adhésive autocollante.

13. Feuille adhésive autocollante comprenant :
un substrat de support revêtu sur une surface avec la composition adhésive autocollante selon la revendication 11 ;
dans laquelle le substrat de support est de préférence un textile ou un film polymère, un film polymère expansé ou un papier, le textile étant plus préférablement un matériau tissé ou non tissé ; et/ou
dans laquelle le film polymère est plus préférablement un film en polyoléfine, un film en polyester ou un film en poly(chlorure de vinyle).

14. Utilisation de la feuille adhésive autocollante selon la revendication 13 pour l'étiquetage d'articles, les articles comprenant de préférence des bouteilles et des emballages, tels que des emballages alimentaires ; et/ou pour ruban adhésif de papeterie et/ou ruban adhésif double face.

15. Utilisation d'un polymère en dispersion présentant un maximum de tanDelta dans une plage de température comprise entre -25 °C et -15 °C, et une valeur de tanDelta à 130 °C comprise entre 0,33 et 0,60, la valeur de tanDelta étant déterminée par une analyse mécanique dynamique (DMA) à une fréquence angulaire de 10 rad/s à l'aide d'un dispositif à plaques parallèles, pour la production d'un adhésif autocollant.
